(19) Europäisches Patentamt
European Patent Office
Office européen des brevets

(11) EP 4 001 487 A1

(12) EUROPEAN PATENT APPLICATION
published in accordance with Art. 153(4) EPC

(43) Date of publication:
**25.05.2022 Bulletin 2022/21**

(21) Application number: **20840877.3**

(22) Date of filing: **02.07.2020**

(51) International Patent Classification (IPC):
***D04H 1/498*** *(2012.01)* ***B01D 39/16*** *(2006.01)*
***D04H 1/492*** *(2012.01)* ***D04H 3/11*** *(2012.01)*

(52) Cooperative Patent Classification (CPC):
**B01D 39/16; D04H 1/492; D04H 1/498; D04H 3/11**

(86) International application number:
**PCT/JP2020/025997**

(87) International publication number:
**WO 2021/010178 (21.01.2021 Gazette 2021/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.07.2019 JP 2019131482**
**16.07.2019 JP 2019131483**

(71) Applicant: **Kuraray Kuraflex Co., Ltd.**
**Okayama 702-8045 (JP)**

(72) Inventors:
- **NAKAYAMA, Kazuhisa**
  **Okayama-shi, Okayama 702-8045 (JP)**
- **OCHIAI, Toru**
  **Okayama-shi, Okayama 702-8045 (JP)**
- **OBATA, Soichi**
  **Okayama-shi, Okayama 702-8045 (JP)**

(74) Representative: **Müller-Boré & Partner**
**Patentanwälte PartG mbB**
**Friedenheimer Brücke 21**
**80639 München (DE)**

(54) **FIBER STRUCTURE AND PRODUCTION METHOD THEREFOR**

(57) Provided is a fiber structure which can have both a high filtering efficiency and a small pressure loss. The fiber structure comprises ultrafine fibers having a number average single fiber diameter of 4.5 μm or smaller and non-ultrafine fibers having a number average single fiber diameter of 5.5 μm or larger, wherein the ultrafine fibers and the non-ultrafine fibers are unitedly intermingled, and the fiber structure includes projections on at least one surface thereof. For example, in the fiber structure, the ultrafine fibers may be heat-resistant ultrafine fibers, and the non-ultrafine fibers may be heat-resistant non-ultrafine fibers.

Fig. 1

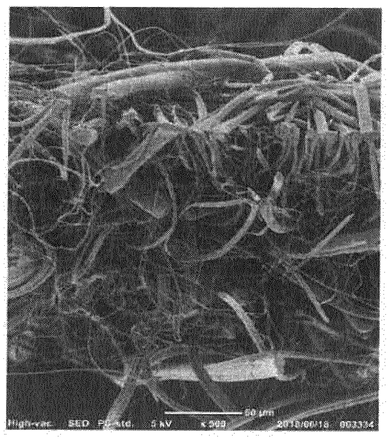

EP 4 001 487 A1

## Description

CROSS REFERENCE TO THE RELATED APPLICATION

This application is based on and claims Convention priority to Japanese patent application No. 2019-131482, filed July 16, 2019 and Japanese patent application No. 2019-131483, filed July 16, 2019, the entire disclosures of which are herein incorporated by reference as a part of this application.

FIELD OF THE INVENTION

The present invention relates to a fiber structure comprising ultrafine fibers and non-ultrafine fibers, the ultrafine fibers and the non-ultrafine fibers being unitedly intermingled, as well as to a production method therefor.

BACKGROUND OF THE INVENTION

Nonwoven fabrics have been conventionally used as filtering materials for air filters. Among them, a nonwoven fabric made of meltblown ultrafine fibers is excellent in collecting microdusts such as pollens and airborne dusts in gaseous condition.

Since the meltblown nonwoven fabric is composed of ultrafine single fibers, the meltblown nonwoven fabric is excellent in collecting microdusts; on the other hand, the meltblown nonwoven fabric has a high fiber density due to ultrafine property of the fibers and thus has a problem to have a large pressure loss at the time of gas permeation.

In order to obtain a fiber structure with a small pressure loss, the fiber structure should be composed of constituent fibers with a large single fiber fineness. However, the large single fiber fineness of the nonwoven fabric causes a reduced fiber surface area in the nonwoven fabric so as to cause a problem of reduced filtering efficiency. Therefore, it is contradictory to have a high filtering efficiency while having a small pressure loss.

In order to solve such a problem, some attempts have been made such that a layered body including a fiber layer of single fibers with a large fineness and a fiber layer of single fibers with a small fineness is used or that a nonwoven fabric is subjected to electrification to impart electrostatic activity in addition to physical capture, so as to achieve a high filtering efficiency and a small pressure loss.

For example, Patent Document 1 (WO 2017/018317 A1) discloses a fiber layered body including a first fiber layer which has a first main face and is composed of a first fiber aggregate and a second fiber layer which is a fiber layer provided on the first main face and is composed of a second fiber aggregate, wherein the fiber layered body has a first-surface irregularity on at least one of the first main face and a first layer-sided main face of the second fiber layer, and the first-surface irregularity contains projections each having a height of 0.1 mm or larger. Patent Document 1 evaluates filtration performance of the fiber layered body after electrification.

CONVENTIONAL ART DOCUMENT

PATENT DOCUMENT

[Patent Document 1] WO 2017/018317 A1

SUMMARY OF THE INVENTION

Patent Document 1, however, has a room for sufficiently achieving both a high filtering efficiency and a small pressure loss, in particular, from the view point of decrease in pressure loss.

Under environments such as highly humid atmospheres where filters are likely to be affected by moisture, the filters tend to be destaticized by the moisture regardless of electrification, making it difficult to take advantage of electrostatic action. For this reason, in such an environment, it is necessary to improve a dust filtering efficiency by physical capture while suppressing a pressure loss. Since Patent Document 1 only determined a filtering efficiency and a pressure loss of the fiber layered body after electrification, filter performance by physical capture excluding the effect of electrostatic action was unknown.

In Patent Document 1, simple overlay of the first fiber layer made of the non-ultrafine fibers having a large average fiber diameter with the second fiber layer made of the ultrafine fibers having a small average fiber diameter has led to fluffing derived from the ultrafine fibers of the second fiber layer, thus deteriorating the handleability of the fiber layered body.

Therefore, an object of the present invention is to provide a fiber structure which achieves both a high filtering efficiency and a small pressure loss; moreover, the fiber structure achieves a high filtering efficiency and a small pressure

loss even without being subjected to electrification, and further the fiber structure has good handleability.

The present inventors have conducted extensive studies for achieving the object described above, and found that (i) by performing entangling treatment to a layered body comprising an ultrafine fiber layer and a non-ultrafine fiber layer, the ultrafine fiber layer being made of ultrafine fibers which have a small average fiber diameter and contribute to a filtering efficiency, and the non-ultrafine fiber layer being made of non-ultrafine fibers which have a large average fiber diameter and contribute to a small pressure loss and having projections on at least one surface thereof, these ultrafine and non-ultrafine fibers are unitedly intermingled. The present inventors further found that (ii) surprisingly, thus-obtained fiber structure in which the ultrafine fibers and the non-ultrafine fibers are unitedly intermingled can have a reduced pressure loss and thus have excellent filtration performance achieving both the filtering efficiency and the pressure loss, as compared with those of a simply overlaid layered body in which an ultrafine fiber layer and a non-ultrafine fiber layer are overlaid on each other; that (iii) the fiber structure can have excellent filtration performance by physical capture, even excluding the effect of electrostatic action by destaticization; and that (iv) the fiber structure can have excellent handleability without fluffing. Based on these findings, the present inventors have accomplished the present invention.

That is, the present invention may include the following aspects.

Aspect 1

A fiber structure comprising ultrafine fibers having a number average single fiber diameter of 4.5 μm or smaller (preferably 4.0 μm or smaller, and more preferably 3.0 μm or smaller) and non-ultrafine fibers having a number average single fiber diameter of 5.5 μm or larger (preferably 6.0 μm or larger, and more preferably 7.0 μm or larger), wherein the ultrafine fibers and the non-ultrafine fibers are unitedly intermingled, and the fiber structure has projections on at least one surface thereof.

Aspect 2

The fiber structure according to aspect 1, wherein the ultrafine fibers are heat-resistant ultrafine fibers, and the non-ultrafine fibers are heat-resistant non-ultrafine fibers.

Aspect 3

The fiber structure according to aspect 1 or 2, wherein the ultrafine fibers and the non-ultrafine fibers are not fused to each other.

Aspect 4

The fiber structure according to any one of aspects 1 to 3, wherein the fiber structure is an entangled product of one or more ultrafine fiber nonwoven fabrics including the ultrafine fibers and one or more non-ultrafine fiber nonwoven fabrics including the non-ultrafine fibers.

Aspect 5

The fiber structure according to any one of aspects 1 to 4, wherein the fiber structure contains the ultrafine fibers in an upper layer part and a lower layer part which are two halves in a cross-sectional thickness direction of the fiber structure, at a ratio of from 25/75 to 75/25 (preferably from 30/70 to 70/30, and more preferably from 33/67 to 67/33) as (ultrafine fibers in upper layer part) / (ultrafine fibers in lower layer part).

Aspect 6

The fiber structure according to any one of aspects 1 to 5, wherein the projections have a height in a range of from 0.05 to 5.00 mm (preferably from 0.08 to 2.00 mm, and from 0.10 to 1.00 mm).

Aspect 7

The fiber structure according to any one of aspects 1 to 6, wherein the fiber structure has a projection density of 3 or more projections/$cm^2$ (preferably 5 or more projections/$cm^2$, and more preferably 10 or more projections/$cm^2$).

Aspect 8

The fiber structure according to any one of aspects 1 to 7, wherein the fiber structure has a basis weight of from 15 to 120 $g/m^2$ (preferably 18 to 100 $g/m^2$, and more preferably 20 to 80 $g/m^2$).

Aspect 9

The fiber structure according to any one of aspects 1 to 8, wherein the fiber structure has a filtering efficiency of 5% or higher (preferably 7% or higher, more preferably 10% or higher, and further preferably 15% or higher) after destaticization.

Aspect 10

The fiber structure according to any one of aspects 1 to 9, wherein the fiber structure has a QF value of 0.03 or larger (preferably 0.05 or larger, and more preferably 0.08 or larger) which is calculated by the following formula from a filtering efficiency and a pressure loss after destaticization.

$$\text{QF value} = -\ln(1 - \text{filtering efficiency (\%)} / 100) / \text{pressure loss (Pa)}$$

Aspect 11

The fiber structure according to any one of aspects 1 to 10, wherein the fiber structure has a QF value of 0.25 or larger which is calculated by the following formula from a filtering efficiency and a pressure loss after heating at 100°C for 48 hours.

$$\text{QF value} = -\ln(1 - \text{filtering efficiency (\%)} / 100) / \text{pressure loss (Pa)}$$

Aspect 12

The fiber structure according to any one of aspects 1 to 11, wherein the fiber structure is not subjected to electrification.

Aspect 13

An air filter comprising the fiber structure as recited in any one of aspects 1 to 12.

Aspect 14

A method of producing the fiber structure as recited in any one of aspects 1 to 12, the method at least comprising:

preparing a layered body of (i) an ultrafine fiber layer including ultrafine fibers having a number average single fiber diameter of 4.5 μm or smaller and (ii) a non-ultrafine fiber layer including non-ultrafine fibers having a number average single fiber diameter of 5.5 μm or larger, the non-ultrafine fiber layer having projections on at least one surface thereof; and
subjecting the layered body to entangling treatment.

Aspect 15

The method according to aspect 14, wherein the non-ultrafine fiber layer is a meltblown nonwoven fabric.

Aspect 16

The method according to aspect 14 or 15, wherein the non-ultrafine fiber layer has an apparent density of from 0.005 to 0.07 $g/cm^3$ (preferably 0.01 to 0.06 $g/cm^3$, and more preferably 0.02 to 0.05 $g/cm^3$).

Aspect 17

The method according to any one of aspects 14 to 16, wherein the entangling treatment is carried out by spunlacing.

Aspect 18

The method according to any one of aspects 14 to 17, wherein the ultrafine fiber layer and the non-ultrafine fiber layer have basis weight W1 and W2, respectively, at a ratio W2/W1 of from 1.2 to 8.0 (preferably from 1.3 to 5.0, more preferably from 1.5 to 3.5, and even preferably from 1.7 to 2.5).

The present invention encompasses any combination of at least two features disclosed in the claims and/or the specification and/or the drawings. In particular, any combination of two or more of the appended claims should be equally construed as included within the scope of the present invention.

EFFECTS OF THE INVENTION

The fiber structure according to the present invention includes ultrafine fibers and non-ultrafine fibers which are unitedly intermingled, so that the fiber structure can achieve both a high filtering efficiency and a small pressure loss, and can achieve both a high filtering efficiency and a small pressure loss even without being subjected to electrification (even after destaticization). Further, since the ultrafine fibers are unitedly intermingled with the non-ultrafine fibers, instead of being independently existed, the fiber structure according to the present invention can suppress fluffing during handling and thus be excellent in handleability.

BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the figures,

Fig. I is a magnified image (magnification: 500 times) showing a cross section of a fiber structure according to one embodiment of the present invention in a thickness direction;
Fig. 2 is a magnified image (magnification: 30 times) showing a cross section of a fiber structure according to one embodiment of the present invention in a thickness direction, in which white lines indicate the contour of a surface of the fiber structure in the cross section; and
Fig. 3 is a schematic cross-sectional view for illustrating a thickness and a projection height of a fiber structure.

DESCRIPTION OF THE EMBODIMENTS

A fiber structure according to the present invention comprises ultrafine fibers and non-ultrafine fibers, the ultrafine fibers and the non-ultrafine fibers being unitedly intermingled. The fiber structure has projections on at least one surface of the fiber structure.

Method of Producing Fiber Structure

A method of producing a fiber structure according to the present invention may at least comprise:

preparing a layered body of (i) an ultrafine fiber layer including ultrafine fibers having a number average single fiber diameter of 4.5 $\mu$m or smaller and (ii) a non-ultrafine fiber layer including non-ultrafine fibers having a number average single fiber diameter of 5.5 $\mu$m or larger, the non-ultrafine fiber layer having projections on at least one surface of the non-ultrafine fiber layer; and
subjecting the layered body to entangling treatment.

Preparing Step

In the preparing step, a specific layered body including an ultrafine fiber layer and a non-ultrafine fiber layer is prepared. The ultrafine fiber layer and the non-ultrafine fiber layer both constituting the layered body may be separately prepared as an ultrafine fiber sheet and a non-ultrafine fiber sheet, respectively, and be overlaid on one another to give

a layered body. Alternatively, one fiber sheet (e.g., an ultrafine fiber sheet) may be directly formed on another fiber sheet (e.g., a non-ultrafine fiber sheet) to give a layered body. In terms of enhancing variation of materials, it is preferable to separately prepare an ultrafine fiber sheet and a non-ultrafine fiber sheet and to overlay them on one another to give a layered body. In the layered body, these sheets may be simply overlaid on one another without being bonded (adhesive free) so as to sufficiently unitedly intermingle the ultrafine fibers and the non-ultrafine fibers in a later entangling step.

The layered body may include one or more ultrafine fiber layers and one or more non-ultrafine fiber layers. In a case where the layered body includes a plurality of such layers, the ultrafine fiber layers and the non-ultrafine fiber layers may be layered alternately.

Non-Ultrafine Fiber Layer

The non-ultrafine fiber layer before entanglement may include the non-ultrafine fibers having a number average single fiber diameter of 5.5 μm or larger and may have a plurality of projections on at least one surface thereof. The projections may be located on a surface of the non-ultrafine fiber layer which is in contact with the ultrafine fiber layer, so that the non-ultrafine fiber layer is sufficiently entangled with the ultrafine fiber layer. In the entangling process of the layered body to entangle the non-ultrafine fiber layer with ultrafine fiber layer, presumably because the projections of the non-ultrafine fiber layer affect ultrafine fiber entering into the non-ultrafine fiber layer, so that entangling process makes it possible for the ultrafine fibers to be more easily introduced into a framework shaped by the non-ultrafine fibers while the framework of the fiber structure is maintained by the non-ultrafine fibers.

The non-ultrafine fiber sheet for the non-ultrafine fiber layer is not limited to a particular type as long as the non-ultrafine fibers of the sheet can be intermingled with the ultrafine fibers, and may be any of a woven fabric, a knitted fabric, a nonwoven fabric, a web, and the like. For example, such a non-ultrafine fiber sheet may be produced by subjecting a fiber sheet having a flat surface to post processing or the like to form a plurality of projections thereon. Alternatively, a fiber sheet (meltblown nonwoven fabric) having a plurality of projections may be produced by meltblowing.

The projections of the non-ultrafine fiber layer may preferably have rigidity so as to sufficiently entangle the non-ultrafine fiber layer with the ultrafine fiber layer. In such a case, the non-ultrafine fiber layer may preferably be produced by meltblowing. Where a fiber sheet having projections is produced by meltblowing, fibers in a stream injected from a nozzle may be collected on an uneven surface of a collecting body to produce the fiber sheet. That is, the fibers in a stream enter and are solidified in recesses (or through-hole portions) on the collecting surface to form projections on at least one surface of the nonwoven fabric. The collecting body may preferably be a metal collecting body having many projections or recesses, or a metal mesh net, or card clothing (cloth with needle or teeth on its surface). Among these, a net having a three-dimensional structure or a so-called conveyer net may more preferably be used as a collecting body. Use of a conveyer net makes it possible to more easily produce a meltblown nonwoven fabric having projections (for example, projections in a wavelike form).

In order to impart rigidity such that the shape of the non-ultrafine fibers as the framework of the fiber structure can be maintained even after entanglement between the non-ultrafine fiber layer and the ultrafine fiber layer, it is preferable to collect the fibers on the collecting surface under the condition where the fibers in the fiber stream in meltblowing are still thick (before they become finer) while the fibers are not solidified yet. For example, it is preferable to shorten the collection distance for the fiber stream in meltblowing or to increase a resin viscosity or the like to make a fiber diameter larger so as to extend a time before solidification. Specifically, the collection distance (i.e., the distance from the nozzle to the collecting surface) may fall within a range of from 3 to 100 cm, preferably from 5 to 80 cm, and more preferably from 7 to 60 cm. The resin viscosity differs depending on a resin to be used and melting temperature. For example, the resin viscosity may fall within a range of from 5 to 100 Pa·s, preferably from 10 to 80 Pa·s, and more preferably from 15 to 50 Pa·s.

The fibers constituting the non-ultrafine fiber layer may preferably be continuous fibers in order to improve rigidity and to be sufficiently entangled with the ultrafine fiber layer.

The fibers (non-ultrafine fibers) constituting the non-ultrafine fiber layer can be selected according to the intended use, and may comprise any of natural fibers, regenerated fibers, semi-synthetic fibers, and synthetic fibers. More specifically, examples of the fibers may include natural fibers such as cotton, hemp, wool and pulp; regenerated fibers such as rayon, polynosic and cupra; semi-synthetic fibers such as acetate fibers and triacetate fibers; and synthetic fibers such as polyolefinic fibers containing a polyolefinic resin such as a polyethylene and a polypropylene, polystyrene-based fibers containing a polystyrene-based resin such as polystyrene, polyester-based fibers containing a polyester-based resin such as a polyethylene terephthalate, a polybutylene terephthalate, a polytrimethylene terephthalate, a polylactic acid, polyamide-based fibers containing a polyamide-based resin such as polyamide 6, polyamide 66, polyamide 11, polyamide 12, polyamide 610, and polyamide 612, polycarbonate-based fibers containing a polycarbonate-based resin, polyurethane-based fibers containing a polyurethane-based resin, acrylic fibers containing an acrylic resin such as a polyacrylonitrile, various heat-resistant fibers, and others. These fibers may be used alone or in combination of two or more.

The fibers may be non-composite fibers or composite fibers (such as core-sheath type composite fibers, sea-island type composite fibers, and side-by-side type composite fibers). In a case of composite fibers, for example, the composite fibers preferably contain a low melting point resin as one component (e.g., sheath component, or sea component) and a high melting point resin as another component (e.g., core component, or island component). Such a low melting point resin and a high melting point resin may be appropriately selected from the above-mentioned resins for forming fibers depending on the treatment temperature in thermal bonding.

Among these fibers, preferable one may include polyolefinic fibers, polyester-based fibers, acrylic fibers, heat-resistant fibers, and composite fiber containing these resins thereof.

The heat-resistant fibers (non-ultrafine fibers) constituting the non-ultrafine fiber layer may be fibers comprising a heat-resistant polymer having a unit with a structure such as aromatic, heterocycle, sulfur-containing, and nitrogen-containing in the polymer molecule. Examples of the heat-resistant fibers may include polyetheretherketone (PEEK) fibers, polyetherketone (PEK) fibers, polyetherketoneketone (PEKK) fibers, polyphenylene sulfide (PPS) fibers, aromatic polyamide fibers (for example, polyamide fibers comprising aliphatic diamine units and aromatic dicarboxylic acid units), aramid fibers (para-aramid fibers, meta-aramid fibers), polyimide (PI) fibers, polyetherimide (PEI) fibers, polyamideimide fibers, amorphous polyarylate fibers, liquid crystal polyester fibers, polybenzoxazole (PBO) fibers, polybenzoimidazole (PBI) fibers, polybenzothiazole fibers, polytetrafluoroethylene (PTFE) fibers, melamine fibers, novoloid fibers, and the like. These fibers may be used singly or in combination of two or more.

Among these fibers, from viewpoints of melt-spinnability and heat resistance, preferred fibers may include liquid crystal polyester fibers, polyether imide fibers, polyphenylene sulfide fibers, semi-aromatic polyamide fibers (for example, semi-aromatic polyamide fibers comprising terephthalic acid unit as the dicarboxylic acid unit and l,9-nonandiamine unit and/or 2-methyl-1,8-octanediamine unit as the diamine unit), and others.

Liquid Crystal Polyester Fiber

Liquid crystal polyester fiber (sometimes referred to as polyarylate-series liquid crystal resin fiber) is a fiber that can be obtained by spinning of liquid crystal polymer (LCP), for example, melt-spinning liquid crystal polyester. The liquid crystal polyester comprises repeating structural units originating from, for example, aromatic diols, aromatic dicarboxylic acids, aromatic hydroxycarboxylic acids, etc. As long as the effect of the present invention is not spoiled, the repeating structural units originating from aromatic diols, aromatic dicarboxylic acids, and aromatic hydroxycarboxylic acids are not limited to a specific chemical composition. The liquid crystal polyester may include the structural units originating from aromatic diamines, aromatic hydroxy amines, or aromatic aminocarboxylic acids in the range which does not spoil the effect of the present invention. For example, the preferable structural units may include units shown in Table 1.

Table 1

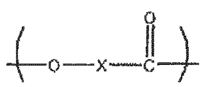, 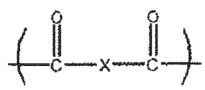, 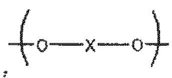, 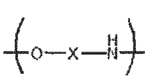

In the formula, X is selected from the following structures.

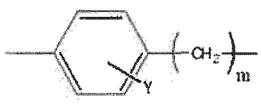, 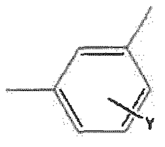, 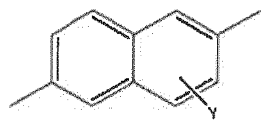,

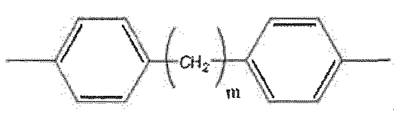, 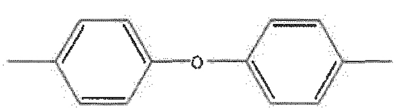,

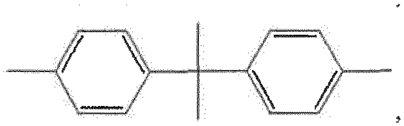, 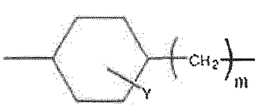, 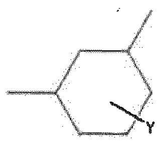

m is an integer from 0 to 2, Y is a substituent selected from hydrogen atom, halogen atoms, alkyl groups, aryl groups, aralkyl groups, alkoxy groups, aryloxy groups, aralkyloxy groups.

In the structural units of Table 1, m is an integer from 0 to 2, and Y independently represents, as from one substituent to the number of substituents in the range of the replaceable maximum number of aromatic ring, a hydrogen atom, a halogen atom (for example, fluorine atom, chlorine atom, bromine atom and iodine atom), an alkyl group (for example, an alkyl group having 1 to 4 carbon atoms such as methyl group, ethyl group, isopropyl group and t-butyl group), an alkoxy group (for example, methoxy group, ethoxy group, isopropoxy group, n-butoxy group, etc.), an aryl group (for example, phenyl group, naphthyl group, etc.), an aralkyl group [benzyl group (phenylmethyl group), phenethyl group (phenylethyl group)], an aryloxy group (for example, phenoxy group etc.), an aralkyloxy group (for example, benzyloxy group etc.), and others.

As more preferable structural units, there may be mentioned structural units as described in Examples (1) to (18) shown in the following Tables 2, 3, and 4. It should be noted that where the structural unit in the formula is a structural unit which can show a plurality of structures, combination of two or more units may be used as structural units for a polymer.

Table 2

(1) 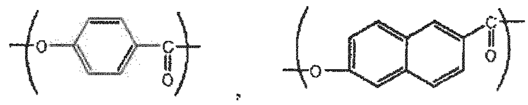

(2) 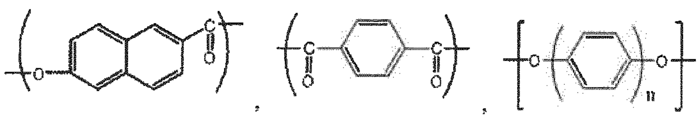

(3) 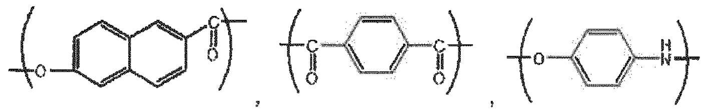

(4) 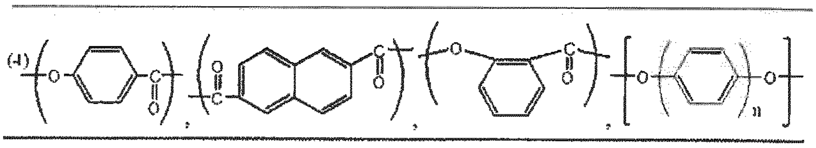

(5) 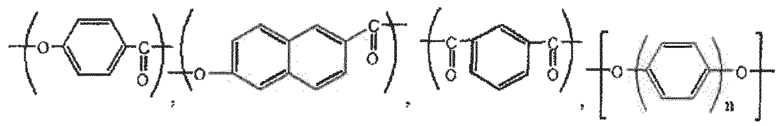

(6) 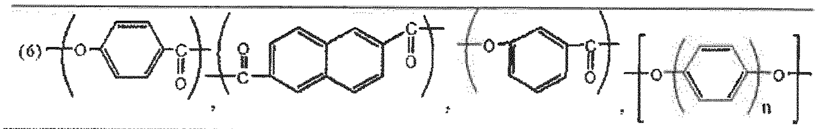

(7) 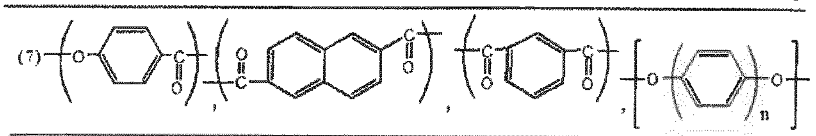

(8) 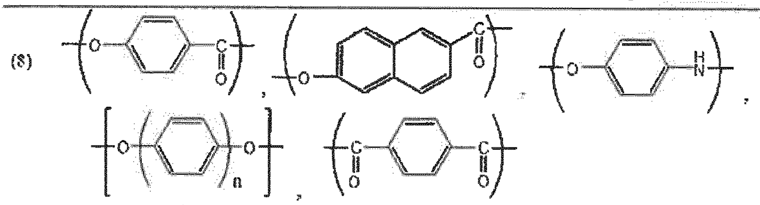

Table 3

| | |
|---|---|
| (9) | 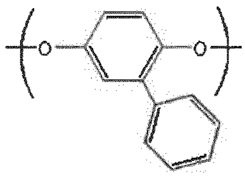 , 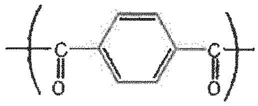 |
| (10) | 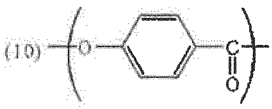 , 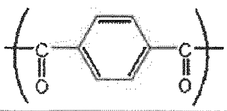 , 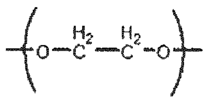 |
| (11) | 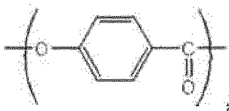 , 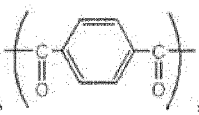 , 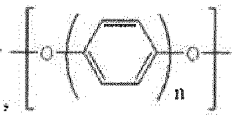 , 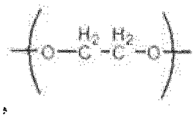 |
| (12) | 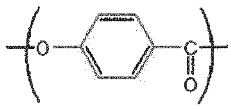 , 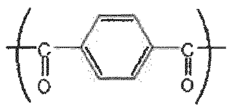 , 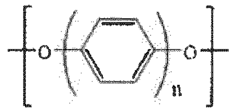 |
| (13) | 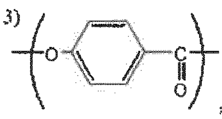 , 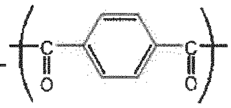 , 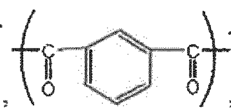 , 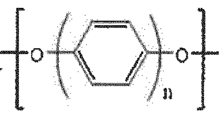 |
| (14) | 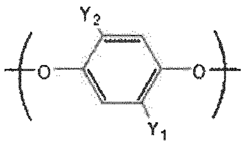 , 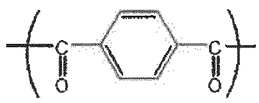 , 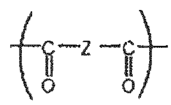 |
| (15) | 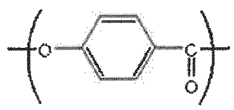 , 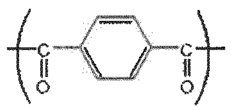 , 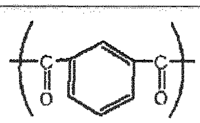 , 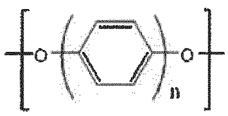 , 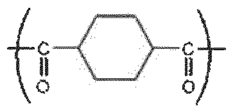 |

Table 4

| | |
|---|---|
| (16) | 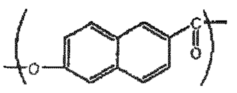, 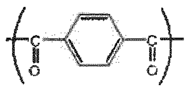, 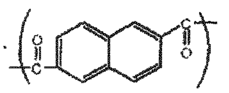, 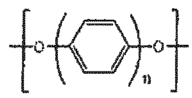 |
| (17) | 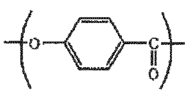, 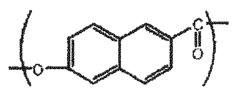, 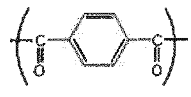, 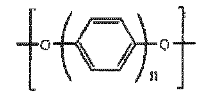 |
| (18) | 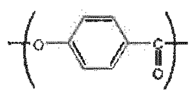, 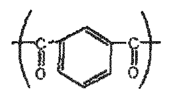, 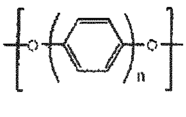 |

In the structural units shown in Tables 2, 3, and 4, n is an integer of 1 or 2, among each of the structural units, n = 1 and n = 2 may independently exist, or may exist in combination; each of the $Y_1$ and $Y_2$ independently represents a hydrogen atom, a halogen atom, (for example, fluorine atom, chlorine atom, bromine atom, iodine atom, etc.), an alkyl group (for example, an alkyl group having 1 to 4 carbon atoms such as methyl group, ethyl group, isopropyl group, and t-butyl group, etc.), an alkoxy group (for example, methoxy group, ethoxy group, and isopropoxy group, n-butoxy group, etc.), an aryl group (for example, phenyl group, naphthyl group, etc.), an aralkyl group [benzyl group (phenylmethyl group), phenethyl group (phenylethyl group), etc.], an aryloxy group (for example, phenoxy group etc.), an aralkyloxy group (for example, benzyloxy group etc.), and others. Among these, the preferable Y may include a hydrogen atom, a chlorine atom, a bromine atom, and methyl group.

Z may include substitutional groups denoted by following formulae.

Chem. 1

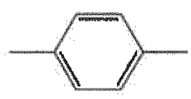, 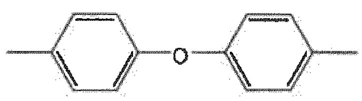, 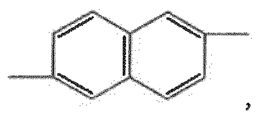,

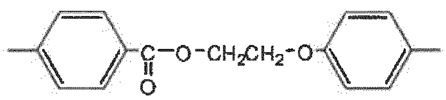, 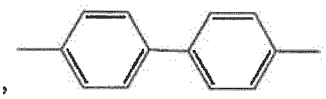

Preferable liquid crystal polyesters may comprise a combination of a structural unit having a naphthalene skeleton. Especially preferable one may include both the structural unit (A) derived from hydroxybenzoic acid and the structural unit (B) derived from hydroxy naphthoic acid. For example, the structural unit (A) may have a following formula (A), and the structural unit (B) may have a following formula (B). From the viewpoint of improvement in melt-spinnability, the ratio of the structural unit (A) to the structural unit (B) may be in a range of former/latter of from 9/1 to 1/1, more preferably from 7/1 to 1/1, and still preferably from 5/1 to 1/1.

Chem. 2

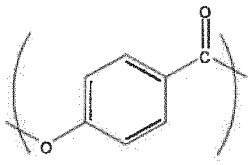

... (A)

Chem. 3

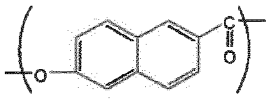

... (B)

The total proportion of the structural units of (A) and (B) may be, based on all the structural units, for example, greater than or equal to 65 mol %, more preferably greater than or equal to 70 mol %, and still more preferably greater than or equal to 80 mol %. The liquid crystal polyester having the structural unit (B) at a proportion of from 4 to 45 mol % is especially preferred among polymers.

Further, as the constitution of liquid crystal polyester (polyarylate-series liquid crystal resin) for forming liquid crystal polyester fibers, a constitution comprising para-hydroxybenzoic acid and 6-hydroxy-2-naphthoic acid as the main components, or a constitution comprising para-hydroxybenzoic acid, 6-hydroxy-2-naphthoic acid, terephthalic acid, and biphenol as the main components are preferred.

The liquid crystal polyester may preferably have a melt-viscosity at 310°C of lower than or equal to 20 Pa·s from the viewpoint of reduced oligomer generation at the time of polymerization as well as facilitation of finer fiber formation. In view of easier spinnability, the liquid crystal polyester may preferably have a melt-viscosity at 310°C of higher than or equal to 5 Pa·s.

The liquid crystal polyester suitably used in the present invention preferably has a melting point of in the range from 250 to 360°C, and more preferably from 260 to 320°C. The melting point here means a main absorption peak temperature measured and observed in accordance with JIS K7121 examining method using a differential scanning calorimeter (DSC; "TA3000" produced by Mettler). More concretely, after taking 10 to 20 mg of a sample into the above-mentioned DSC apparatus to enclose the sample in an aluminum pan, nitrogen as carrier gas is introduced at a flow rate of 100 cc/minute and a heating rate of 20°C/minute, the position of an appearing endothermic peak is measured. In some kinds of polymer, where a clear peak does not appear in the first run in the DSC measurement, after heating the sample to a temperature 50°C higher than the flow temperature expected with a heating rate of 50°C/minute so as to make the sample to be completely molten for 3 minutes, and the melt is quenched to 50°C at a rate of 80°C/minute. Subsequently, the quenched material is reheated at a heating rate of 20°C/minute, and the position of an appearing endothermic peak may be recorded.

As the liquid crystal polyester, there may be exemplified a fully aromatic polyester capable of forming liquid crystal in melt phase which comprises a copolymerization product of para-hydroxybenzoic acid and 6-hydroxy-2-naphthoic acid ("Vectra-L type" produced by Polyplastics, Inc.).

Polyetherimide Fiber

Polyetherimide fibers can be obtained by melt-spinning polyether imide polymer (PEI). The polyetherimide may comprise an ether unit of aliphatic unit, alicycle unit, or aromatic unit and a cyclic imide unit as repeating structural units. As long as the effect of the present invention is not spoiled, the main chain of the polyetherimide polymer may comprise a structure unit(s) other than cyclic imide unit and the ether bond unit. The structure unit(s) may include, for example, an aliphatic ester unit, an alicycle ester unit, or an aromatic ester unit, an oxycarbonyl unit, and others. The polyetherimide may be crystalline or amorphous, and preferably an amorphous polymer.

The polyetherimide polymer may be a polymer comprising a combination of repeating structural units as shown in the general formula below. In the formula, R1 represents a divalent aromatic residue having 6 to 30 carbon atoms; R2 represents a divalent organic group selected from the group consisting of a divalent aromatic residue having 6 to 30 carbon atoms, an alkylene group having 2 to 20 carbon atoms, a cycloalkylene group having 2 to 20 carbon atoms, and a polydiorganosiloxane group in which the chain is terminated by an alkylene group having 2 to 8 carbon atoms.

Chem. 4

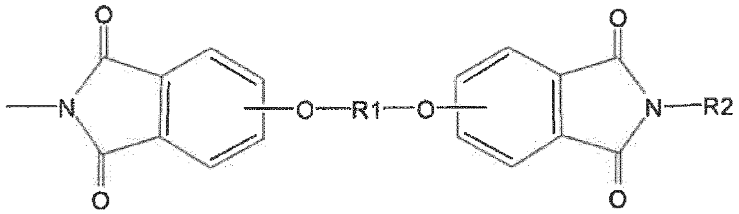

The preferable R1 and R2 include, for example, an aromatic residue and an alkylene group (e.g., m = 2 to 10) shown in the following formulae.

Chem. 5

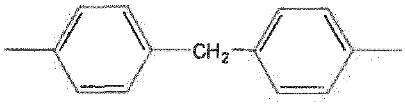

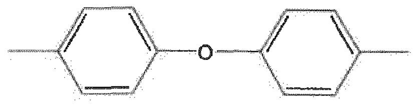

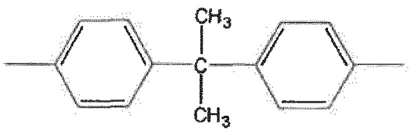

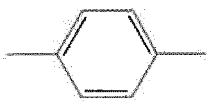

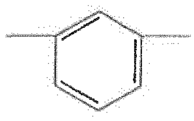

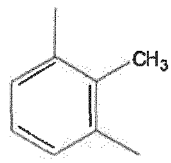

$-(CH_2)_m-$

In the present invention, from the viewpoint of melt-spinnability and cost reduction, a preferable polymer may include a condensate of 2,2-bis-4-(2,3-dicarboxyphenoxy)phenyl]propane dianhydride and m-phenylenediamine, having a structural unit shown by the following formula as a main constituent. Such a polyetherimide is available from SABIC Innovative Plastics Holding under the trademark of "ULTEM".

Chem. 6

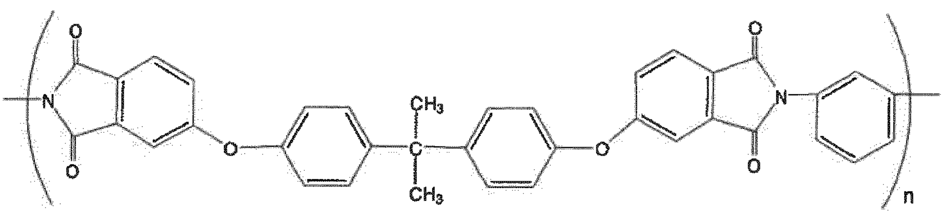

The resin forming a polyetherimide fiber may preferably contain a polymer having a unit represented by the above general formula at a proportion of at least greater than or equal to 50 mass%, more preferably greater than or equal to 80 mass%, still more preferably greater than or equal to 90 mass%, and particularly preferably greater than or equal to 95 mass%.

As the preferable polyetherimide, there may be used an amorphous polyetherimide having a melt viscosity of 900 Pa·s at a shear rate of 1200 $sec^{-1}$ at a temperature of 330°C using a capilograph 1B produced by Toyo Seiki

Seisakusho, Ltd.

Polyphenylene Sulfide Fiber

Polyphenylene sulfide fibers can be obtained by melt-spinning polyarylene sulfide. The polyarylene sulfide may comprise a repeating structural unit of arylene sulfide represented by -Ar-S- (Ar is an arylene group). The arylene group may include p-phenylene, m-phenylene, naphthylene groups or others. From the viewpoint of heat resistance, a preferable repeating structural unit may be p-phenylene sulfide.

The resin forming the polyphenylene sulfide fibers may preferably contain a polymer having an arylene sulfide repeating structural unit at a proportion of at least greater than or equal to 50 mass% based on the resin, more preferably greater than or equal to 80 mass%, still more preferably greater than or equal to 90 mass%.

The non-ultrafine fiber layer may have a basis weight (a basis weight of a single layer) in a range of for example from about 10 to 100 g/m$^2$, preferably from about 12 to 90 g/m$^2$, and more preferably from about 15 to 80 g/m$^2$. The basis weight of the non-ultrafine fiber layer is determined in accordance with the method described in Examples later.

The non-ultrafine fiber layer may preferably have a relatively course structure so as to sufficiently entangle the non-ultrafine fiber layer with the ultrafine fiber layer and may have an apparent density (an apparent density of a single layer) in a range of for example from about 0.005 to 0.07 g/cm$^3$, preferably from about 0.01 to 0.06 g/cm$^3$, and more preferably from about 0.02 to 0.05 g/cm$^3$. The apparent density of the non-ultrafine fiber layer is determined in accordance with the method described in Examples later.

The non-ultrafine fiber layer may have a thickness (a thickness of a single layer) in a range of for example from about 0.20 to 7.00 mm, preferably from about 0.25 to 6.00 mm, and more preferably from about 0.30 to 5.00 mm. The thickness of the non-ultrafine fiber layer indicates a thickness of the non-ultrafine fiber layer as a whole including a projection height and is determined in accordance with the method described in Examples later.

The non-ultrafine fiber layer may include the projections having a projection height in a range of from about 0.10 to 5.00 mm, preferably from about 0.13 to 2.00 mm, and from about 0.15 to 1.00 mm so as to sufficiently entangle the non-ultrafine fiber layer with the ultrafine fiber layer. The projection height of the non-ultrafine fiber layer indicates a distance from a top to a bottom in each projection on a subject surface for measurement of the projections and is determined in accordance with the method described in Examples later.

The non-ultrafine fiber layer may have a projection density of 3 or more projections/cm$^2$, preferably 5 or more projections/cm$^2$ (for example, from 5 to 50 projections/cm$^2$), and more preferably 10 or more projections/cm$^2$ (for example, from 10 to 30 projections/cm$^2$) so as to sufficiently entangle the non-ultrafine fiber layer with the ultrafine fiber layer. The density of the projections of the non-ultrafine fiber layer is determined in accordance with the method described in Examples later.

The projections on the non-ultrafine fiber layer may be present regularly at certain intervals or irregularly over an entire surface.

The shape of the projections of the non-ultrafine fiber layer is not limited to a specific one as long as the ultrafine fibers and the non-ultrafine fibers can be unitedly intermingled. For example, each projection may have various shapes such as a conical shape, a cylindrical shape, a polygonal shape, a prismatic shape, and a raised shape. In the present invention, the projections are different from fluff which changes its shape merely on contact.

Ultrafine Fiber Layer

The ultrafine fiber layer before entanglement may include the ultrafine fibers having a number average single fiber diameter of 4.5 $\mu$m or smaller.

As the fiber sheet for the ultrafine fiber layer, there may be mentioned meltblown nonwoven fabrics, electrospun nonwoven fabric, and split fiber fabrics (ultrafine fiber fabric obtained from a fabric composed of bundle of fibers of different components by splitting the fibers at interface of the different components), sea-island fiber-derived fabrics (ultrafine fiber fabric obtained from a fabric composed of sea-island fibers by eluting the sea components from the fabric), fibrillated fabrics (ultrafine fiber fabric obtained from a fabric by giving physical impacts to make fibers to be fibrillated), and others. From the viewpoint of handleability, meltblown nonwoven fabrics may be preferably used.

The meltblown nonwoven fabric can be obtained by a meltblowing process in which a molten thermoplastic polymer is extruded from a nozzle with hot air injection so as to obtain a fiber web by thinning the extruded material into a fibrous form while bonding with each other by means of self-fusion characteristics.

The fibers (ultrafine fibers) constituting the ultrafine fiber layer can be appropriately selected depending on the production method, and preferable fibers may include synthetic fibers. Examples of the synthetic fiber-formable resin may include a polyolefinic resin, a polystyrenic resin, an acrylic resin, a polyvinyl alcohol-based resin, a polyvinyl chloride-based resin, a polyvinylidene chloride-based resin, a polyurethane-based resin, a polyester-based resin, a polyether-based resin, a polyamide-based resins, heat-resistant resins constituting heat-resistant fibers used in the above-mentioned non-ultrafine fiber layer, a thermoplastic elastomer, and others. These resins may be used singly or in combination of two or more. The ultrafine fibers may be made of a same type or a different type of resin as/from that of the non-ultrafine fibers. In terms of filtration performance, the ultrafine fibers may preferably be hydrophobic fibers. Further, both of the ultrafine fibers and the non-ultrafine fibers may preferably be hydrophobic fibers.

As the resin constituting the heat-resistant fibers for forming a meltblown nonwoven fabric, there may be mentioned, from viewpoints of melt-spinnability and heat resistance, a liquid crystal polyester, a polyether imide, a polyphenylene sulfide, a semi-aromatic polyamide (for example, semi-aromatic polyamide comprising terephthalic acid unit as the dicarboxylic acid unit and 1,9-nonandiamine unit and/or 2-methyl-1,8-octanediamine unit as the diamine unit), and others.

The ultrafine fiber layer may have a basis weight (a basis weight of a single layer) in a range of for example from about 1.0 to 30 g/$m^2$, preferably from about 2.0 to 25 g/$m^2$, and more preferably from about 3.0 to 20 g/$m^2$ so as to sufficiently entangle the ultrafine fiber layer with the non-ultrafine fiber layer. The basis weight of the ultrafine fiber layer is determined in accordance with the method described in Examples later.

The ultrafine fiber layer may have an apparent density (an apparent density of a single layer) in a range of for example from about 0.01 to 0.30 g/$cm^3$, preferably from about 0.03 to 0.25 g/$cm^3$, and more preferably from about 0.05 to 0.20 g/$cm^3$. The apparent density of the ultrafine fiber layer is determined in accordance with the method described in Examples later.

The ultrafine fiber layer may have a thickness (a thickness of a single layer) in a range of for example from about 0.01 to 0.30 mm, preferably from about 0.03 to 0.25 mm, and more preferably from about 0.05 to 0.20 mm. The thickness of the ultrafine fiber layer is determined in accordance with the method described in Examples later.

In the layered body, the ultrafine fiber layer and the non-ultrafine fiber layer may have basis weights W1 and W2, respectively, at a ratio W2/W1 of from 1.2 to 8.0, preferably from 1.3 to 5.0, more preferably from 1.5 to 3.5, and even preferably from 1.7 to 2.5 so as to sufficiently unitedly intermingle the ultrafine fibers and the non-ultrafine fibers in a later entangling step.

Entangling Step

The entangling treatment is not particularly limited to a specific one as long as the ultrafine fibers and the non-ultrafine fibers can be unitedly intermingled, and a spunlacing method, a needlepunching method, or the like can be used as the entangling treatment. The spunlacing method is preferably used from the viewpoint of effectively unitedly intermingling the ultrafine fibers and the non-ultrafine fibers.

For example, in the spunlacing method, onto a layered body comprising an ultrafine fiber layer and a non-ultrafine fiber layer overlaid on the ultrafine fiber layer, the layered body being placed on a porous support, are injected high pressure water jets (for example, at 1 MPa or higher) from a nozzle having fine holes, then the water jets passing through the layered body hit on the support so as to be reflected to the layered body. The reciprocal water jets give the energy to fibers in the layered body to be entangled.

That is, according to the present invention, upon entangling process of the layered body including the ultrafine fiber layer and the non-ultrafine fiber layer which has projections at least one surface thereof, presumably because the non-ultrafine fiber layer can maintain the shape thereof at a certain degree to work as a framework and the ultrafine fibers can effectively enter into the framework of the non-ultrafine fiber layer via the projections of the non-ultrafine fibers, the non-ultrafine fibers and the ultrafine fibers can be unitedly intermingled. As a result, it is possible to form a structure in which the ultrafine fibers are entangled with the non-ultrafine fibers which form the shape as the framework of the fiber structure, so that it is possible to improve the filtering efficiency while suppressing the pressure loss as compared with a layered body in which these fibers are merely overlaid. The fiber structure may have a finely raised surface due to the entangling treatment. The fine raising may be distinguished from so-called fluffing in that the fine raising is hardly sensible as a touch (hand feeling).

The type of the porous support used in the spunlacing method may be either a drum type or a plate type, or a combination of these. Preferable one to be used is a plate type porous support. The porous support may have an aperture ratio of for example from about 10 to 50%, preferably from about 15 to 40%, and more preferably from about 20 to 30%. The porous support may have a hole size of for example from about 0.01 to 5.0 mm, preferably from about 0.05 to 3.0 mm, and more preferably from about 0.1 to 1.0 mm.

The pressure of the water jets can be appropriately set depending on the thickness of the layered body and the like, and may be for example from about 1 to 10 MPa, preferably from about 1.5 to 9.5 MPa, and further preferably from about 2 to 9 MPa.

Each of the fine holes in the nozzle used for injecting the water jets may have a diameter of for example from about 0.05 to 0.2 mm. The interval between the fine holes in the nozzle may be for example from 0.3 to 5.0 mm, preferably from 0.4 to 3.0 mm, and more preferably from 0.5 to 2.0 mm.

There may be one or more rows of nozzles for injecting the water jets. For example, there may be one to five

rows of nozzles. In order to optimize entanglement between the ultrafine fiber layer and the non-ultrafine fiber layer, two to three rows of nozzles may preferably be used. Where there are multiple rows of nozzles, the pressure of water jets may differ among the rows of nozzles. In order to optimize entanglement between the ultrafine fiber layer and the non-ultrafine fiber layer, it is preferable to increase the pressure of the water jets to be applied to the layered body in a machine-processing direction (MD).

To entangle the ultrafine fiber layer and the non-ultrafine fiber layer, it is preferred that the layered body including the ultrafine fiber layer and the non-ultrafine layer is placed on the porous support; and the layered body on the porous support is continuously conveyed in a longitudinal direction of the layered body at a constant speed to be subjected to the entangling treatment in the conditions described above. The moving speed of the layered body may be, for example, from about 1.0 to 10.0 m/min, preferably from about 2.0 to 9.0 m/min, and more preferably from about 3.0 to 8.0 m/min. By adjusting the moving speed of the layered body within the above range, it is possible to optimize the entanglement between the ultrafine fiber layer and the non-ultrafine fiber layer, while suppressing a pressure loss of the obtained fiber structure and further improving a filtering efficiency (in particular, filtering efficiency by physical capture).

In the entangling treatment, the water jets may be injected from the side of the non-ultrafine fiber layer of the layered body so as to sufficiently unitedly intermingle the non-ultrafine fibers and the ultrafine fibers.

Further, depending on the intended use, the fiber structure may be subjected to electrification to improve the filtering efficiency. The electrification may be performed on a layered body before the entangling treatment, or may be performed on a fiber structure after the entangling treatment.

The electrification is not particularly limited to a specific one as long as the electrification can impart electric charges to a fiber structure, and examples thereof may include corona discharge treatment and hydrocharge treatment. As the hydrocharge treatment, there may be mentioned a method of spraying a jet of water or a stream of water droplets at a pressure sufficient for water to penetrate into the fiber sheet; a method of providing water to a fiber sheet and sucking the provided water from one side of the fiber sheet during or after the providing procedure so as for water to penetrate into the fiber sheet; a method of immersing a fiber structure with a mixed solution of water and a water-soluble organic solvent such as isopropyl alcohol, ethyl alcohol and acetone so as for water to penetrate into the fiber structure; and others.

## Fiber Structure

A fiber structure according to the present invention is a fiber structure comprising ultrafine fibers having a number average single fiber diameter of 4.5 μm or smaller and non-ultrafine fibers having a number average single fiber diameter of 5.5 μm or larger. The ultrafine fibers and the non-ultrafine fibers are unitedly intermingled. The fiber structure has projections on at least one surface thereof. In the present invention, the term "unitedly intermingled" means that the ultrafine fibers and the non-ultrafine fibers are randomly mixed with each other and are not separated into layers. For example, in the fiber structure in Fig. 1, the ultrafine fibers and the non-ultrafine fibers are unitedly intermingled without a clear interface between the ultrafine fiber layer and the non-ultrafine fiber layer, even though the fiber structure is formed by entangling the ultrafine fiber layer and the non-ultrafine fiber layer.

As for filtration mechanisms of air filters for collecting particulate matter, filtration mechanisms by physical capture include (i) mechanisms affected by air flow passing through air filters, such as sedimentation effect, inertial effect and blocking effect of particulate matter, as well as (ii) mechanisms not affected by air flow, such as diffusion effect due to Brownian motion of particulate matter. The fiber structure according to the present invention can have improved filtering efficiency by any of these filtration mechanisms thanks to use of the ultrafine fibers having a small number average fiber diameter while having a reduced pressure loss thanks to use of the non-ultrafine fibers having a large number average fiber diameter. Further, the present inventors have been found that the united intermingle of the ultrafine fibers and the non-ultrafine fibers change air flow passing therethrough, presumably thereby affect these filtration mechanisms by physical capture, so that the present fiber structure can achieve higher filtering efficiency and lower pressure loss than those of a structure in which layers of these fibers are simply overlaid.

In the fiber structure according to the present invention, it is preferable that the ultrafine fibers and the non-ultrafine fibers are not fused to each other. As used herein, the term "fused" and the like means a state where at least a part of fibers is molten, so that the ultrafine fibers and the non-ultrafine fibers are bonded. The fused state can be observed in a magnified image of a cross section of the fiber structure using a microscope. Preferably, the mechanical entanglement between the ultrafine fibers and the non-ultrafine fibers without fusion presumably makes it possible to improve filtering efficiency based on the filtration mechanisms by physical capture while providing an increased fiber surface area and preventing the fibers from excessively suppressing air flow, so that such mechanical entanglement is preferred in terms of achieving both a high filtering efficiency and a small pressure loss.

The fiber structure according to the present invention may be an entangled product (preferably a spunlace nonwoven fabric) of one or more ultrafine fiber sheets (preferably nonwoven fabrics, and more preferably meltblown nonwoven fabrics) including ultrafine fibers and of one or more non-ultrafine fiber sheets (preferably nonwoven fabrics, and more preferably meltblown nonwoven fabrics) including non-ultrafine fibers.

In the fiber structure according to the present invention, the ultrafine fibers and/or non-ultrafine fibers may be long fibers (continuous fibers). In the present invention, the term "long fibers" mean fibers that continuously extend with some length and can be distinguished from short fibers which are cut to a predetermined fiber length so as to have relatively similar fiber lengths. For example, meltblown fibers are long fibers.

The ultrafine fibers comprised in the fiber structure may have a number average single fiber diameter of 4.5 μm or smaller, preferably 4.0 μm or smaller, and more preferably 3.0 μm or smaller (particularly 2.0 μm or smaller). A lower limit of the number average single fiber diameter is not limited to a particular value and may be about 0.05 μm in terms of handleability. The number average single fiber diameter is determined in accordance with the method described in Examples later.

In the present invention, the ultrafine fibers comprised in the fiber structure refer to fibers having a single fiber diameter smaller than 5.0 μm. The single fiber diameter of the ultrafine fibers may preferably be 4.5 μm or smaller, and more preferably 4.0 μm or smaller. A lower limit of the single fiber diameter of the ultrafine fibers is not limited to a particular value and may be about 0.01 μm in terms of handleability. The single fiber diameter is a fiber diameter of a fiber measured when a number average fiber diameter is determined, and the number average fiber diameter is determined in accordance with the method described in Examples later.

On the other hand, the non-ultrafine fibers comprised in the fiber structure may have a number average single fiber diameter of 5.5 μm or larger, preferably 6.0 μm or larger, and more preferably 7.0 μm or larger in terms of rigidity for forming the shape as the framework. An upper limit of the number average single fiber diameter is not limited to a particular value and may be about 50 μm and preferably about 25 μm in terms of optimizing entanglement between the non-ultrafine fibers and the ultrafine fibers. The number average single fiber diameter is determined in accordance with the method described in Examples later.

In the present invention, the non-ultrafine fibers comprised in the fiber structure refer to fibers having a single fiber diameter of 5.0 μm or larger. The single fiber diameter of the non-ultrafine fibers may preferably be 6.0 μm or larger, and more preferably 7.0 μm or larger. An upper limit of the single fiber diameter of the non-ultrafine fibers is not limited to a particular value and may be about 60 μm in terms of handleability. The single fiber diameter is a fiber diameter of a fiber measured when a number average fiber diameter is determined, and the number average fiber diameter is determined in accordance with the method described in Examples later.

In order to optimize entanglement between the ultrafine fibers and the non-ultrafine fibers, a ratio of the number average fiber diameter of the ultrafine fibers to the number average fiber diameter of the non-ultrafine fibers, expressed as (ultrafine fiber) / (non-ultrafine fiber), may fall within a range of for example from 0.05 to 0.80, preferably from 0.08 to 0.50, and more preferably from 0.10 to 0.35.

The fiber structure according to the present invention may contain the ultrafine fibers in an upper layer part and a lower layer part which are two halves in a cross-sectional thickness direction of the fiber structure, at a ratio expressed as (ultrafine fibers lower layer part) / (ultrafine fibers upper layer part) of from 25/75 to 75/25, preferably from 30/70 to 70/30, and more preferably from 33/67 to 67/33. The proportions of the ultrafine fibers in the upper layer part and in the lower layer part are determined in accordance with the method described in Examples later.

In the fiber structure according to the present invention, the ultrafine fibers may have an occupancy of from 20 to 80%, preferably from 25 to 75%, more preferably from 30 to 70%, and even preferably from 35 to 65%. The occupancy of the ultrafine fibers is determined in accordance with the method described in Examples later.

In the fiber structure according to the present invention, the projections may be formed by the non-ultrafine fibers and the ultrafine fibers which are substantially equally entangled to each other or mainly by the non-ultrafine fibers. For example, each projection may have various shapes such as a conical shape, a cylindrical shape, a polygonal shape, a prismatic shape, and a raised shape.

The projections may have a height of from 0.05 to 5.00 mm, preferably 0.08 to 2.00 mm, and more preferably 0.10 to 1.00 mm. The projection height of the fiber structure indicates a distance from a top to a bottom in each projection and is determined in accordance with the method described in Examples later. A reference length for measurement of the projection height may be such a length in a width direction that there are at least 3 projections (for example, 3 to 5 projections) or may be suitably select in a range of for example from 1 to 20 mm.

The projections may be present at a density of 3 or more projections/cm$^2$, preferably 5 or more projections/cm$^2$ (for example, 5 to 50 projections/cm$^2$), and more preferably 10 or more projections/cm$^2$ (for example, 10 to 30 projections/cm$^2$). The projection density of the fiber structure is determined in accordance with the method described in Examples later.

The fiber structure may have a basis weight which is suitably set depending on the use and may be for example from about 15 to 120 g/m$^2$, preferably from about 18 to 100 g/m$^2$, and more preferably from about 20 to 80 g/m$^2$.

The fiber structure may have a thickness of for example from about 0.20 to 7.00 mm, preferably from about 0.25 to 6.00 mm, and more preferably from about 0.30 to 5.00 mm. The thickness of the fiber structure indicates a thickness including the projection height and is determined in accordance with the method described in Examples later. A magnification of a cross-sectional image for thickness measurement may be set such that the whole fiber structure in

a thickness direction can be observed and may be for example from 10 to 100 times.

The fiber structure may have an apparent density of for example from about 0.005 to 0.10 g/cm$^3$, preferably from about 0.01 to 0.08 g/cm$^3$, and more preferably from about 0.02 to 0.07 g/cm$^3$ in order to achieve both a high filtering efficiency and a small pressure loss. The apparent density of the fiber structure is determined in accordance with the method described in Examples later.

The fiber structure preferably has a filtering efficiency (collection efficiency) after electrification as high as possible. In terms of controlling the pressure loss to an appropriate range, however, the fiber structure may have a filtering efficiency of for example 50% or higher (for example, from 50% to 99.99%), preferably 55% or higher, and more preferably 60% or higher. The filtering efficiency after electrification is determined in accordance with the method described in Examples later.

The fiber structure may have a pressure loss after electrification which is set in a range of for example from 0 to 30 Pa depending on the intended use. The pressure loss of the fiber structure may be for example from about 0 to 10 Pa, preferably from about 0 to 8 Pa, and more preferably from about 1 to 7 Pa. The pressure loss after electrification is determined in accordance with the method described in Examples later.

The fiber structure may have a QF value of for example 0.25 or higher, preferably 0.30 or higher, more preferably 0.40 or higher, and even preferably 0.50 or higher, the QF value being calculated by the following formula from a filtering efficiency and a pressure loss after electrification. A higher QF value is more preferable, and an upper limit of the QF value is not limited to a particular value and may be for example about 2.00.

$$\text{QF value} = -\ln(1 - \text{filtering efficiency (\%)} / 100) / \text{pressure loss (Pa)}$$

Since the fiber structure according to the present invention has excellent filtration performance based on the filtration mechanisms by physical capture, the fiber structure can be used in applications in environments such as highly humid atmosphere where the fiber structure is likely to be affected by moisture (e.g., non-electrified air filter applications). For such applications, it is preferable that the fiber structure is not subjected to electrification.

The fiber structure may have a filtering efficiency of for example 5% or higher, preferably 7% or higher, more preferably 10% or higher, further preferably 15% or higher, and even preferably 18% or higher after destaticization. A higher filtering efficiency after destaticization is more preferable, and an upper limit of the filtering efficiency after destaticization is not limited to a particular value and may be for example about 50%. The filtering efficiency after destaticization is determined in accordance with the method described in Examples later.

The fiber structure may have a pressure loss of for example from about 0 to 10 Pa, preferably from about 1 to 8 Pa, and more preferably from about 1 to 7 Pa after destaticization. The filtering efficiency after destaticization is determined in accordance with the method described in Examples later.

The fiber structure may have a QF value of for example 0.03 or higher, preferably 0.05 or higher, and more preferably 0.08 or higher, the QF value being calculated by the following formula from a filtering efficiency and a pressure loss after destaticization. A higher QF value which is calculated from a filtering efficiency and a pressure loss after destaticization is more preferable, and an upper limit of the QF value is not limited to a particular value and may be for example about 0.50.

$$\text{QF value} = -\ln(1 - \text{filtering efficiency (\%)} / 100) / \text{pressure loss (Pa)}$$

The fiber structure may have a filtering efficiency of for example 50% or higher (for example, from 50% to 99.99%), preferably 55% or higher, and more preferably 60% or higher after heating (for example, after heating the fiber structure at 100°C for 48 hours). The filtering efficiency after heating is determined in accordance with the method described in Examples later.

A retention rate of the filtering efficiency before and after heating may be for example 75% or higher, preferably 80% or higher, and more preferably 85% or higher.

The retention rate (%) of the filtering efficiency before and after heating can be calculated by the following formula from a filtering efficiency before electrification (i.e., filtering efficiency before heating) and a filtering efficiency after heating described above.

$$\text{Retention rate (\%) of filtering efficiency before and after heating} = \text{(filtering efficiency after heating)} / \text{(filtering efficiency before heating)} \times 100$$

The fiber structure may have a pressure loss of for example from about 0 to 10 Pa, preferably from about 1 to 8 Pa, and more preferably from about 1 to 7 Pa after heating (for example, after heating the fiber structure at 100°C for 48 hours). The filtering efficiency after heating is determined in accordance with the method described in Examples later.

The fiber structure may have a QF value of for example 0.25 or higher, preferably 0.30 or higher, more preferably 0.40 or higher, and even preferably 0.50 or higher after heating (for example, after heating the fiber structure at 100°C for 48 hours), the QF value being calculated by the following formula from a filtering efficiency and a pressure loss. A higher QF value is more preferable, and an upper limit of the QF value is not limited to a particular value and may be for example about 2.00.

$$\text{QF value} = -\ln(1 - \text{filtering efficiency (\%)} / 100) / \text{pressure loss (Pa)}$$

Such a fiber structure may be suitably used in applications such as filters (in particular, air filters). Examples of such filters may include filters for masks, filters for various air conditioning systems (e.g., in buildings, cleanrooms, coating booths), filters for the motor vehicle industry (such as cabin filters), and general household filters (e.g., for air conditioners, air cleaners, vacuum cleaners). In particular, the fiber structure according to the present invention can be used as a non-electrified filter in various air filter applications.

Where the fiber structure includes heat-resistant fibers, the fiber structure is not only suitable for applications such as filters (in particular, air filters), but also can be used as a filter in a wide range of applications where heat resistance is required. For example, the fiber structure can be used as a filter which is required to have heat resistance, such as filters for heat-resistant masks, filters for various air conditioning systems (e.g., in buildings, cleanrooms, coating booths), filters for the motor vehicle industry (such as cabin filters), and general household filters (e.g., for air conditioners, air cleaners, vacuum cleaners).

EXAMPLES

Hereinafter, the present invention will be described in more detail with reference to Examples. The Examples, however, are not intended to limit the present invention. In the Examples and Comparative Examples below, various physical properties were determined in accordance with the following methods.

Number Average Single Fiber Diameter

Fibrous structure of a fiber structure was observed using a scanning electron microscope. In an electron microscopic image, fibers each having a fiber diameter smaller than 5.0 μm were randomly selected as ultrafine fibers to calculate a number average fiber diameter (n = 100) thereof, and fibers each having a fiber diameter of 5.0 μm or larger were randomly selected as non-ultrafine fibers to calculate a number average fiber diameter (n = 100) thereof.

Ultrafine Fiber Occupancy and Abundance

As for occupancy, in a cross-sectional image showing a cross section of a part of a fiber structure where front and back surfaces of the fiber structure were substantially parallel in a width direction thereof, an area occupied by ultrafine fibers was determined. An occupancy of the ultrafine fibers in the fiber structure was calculated as a proportion of the area occupied by the ultrafine fibers to an area of the entire fiber structure in the cross-sectional image.

As for abundance, by using the same cross-sectional image, the cross-sectional area of the fiber structure was divided into two halves, namely an upper layer part and a lower layer part, in a thickness direction thereof. An abundance of the ultrafine fibers in the upper layer part was calculated as a proportion of an area occupied by the ultrafine fibers in the upper layer part based on the area occupied by the ultrafine fibers in the entire fiber structure. In the same way, an abundance of the ultrafine fibers in the lower layer part was calculated as a proportion of an area occupied by the ultrafine fibers in the lower layer part based on the area occupied by the ultrafine fibers in the entire fiber structure.

Basis Weight and Apparent Density

In accordance with section 6.2 of JIS L 1913 "Testing methods for general nonwoven fabrics," a basis weight ($g/m^2$) was determined. An apparent density ($g/cm^3$) was calculated by dividing the basis weight by a thickness.

Thickness

A fiber structure or fiber sheet was cut at arbitrary 10 points such that each of the cut sections was parallel to

a thickness direction and perpendicular to a machine direction (MD) of the fiber structure or fiber sheet, using a razor blade ("FEATHERS single edge razor blades" produced by FEATHER Safety Razor Co., Ltd.). Each cross-sectional image obtained using digital microscope was observed. A magnification of each cross-sectional image was adjusted to a magnification (30 times) at which projections could be observed while the whole fiber structure or fiber sheet in the thickness direction was shown. Referring to Fig. 3, a distance from a height of a highest one of tops 1 of projections on one (upper) surface to a height of a highest one of tops 3 of projections on the other (lower) surface in the thickness direction was measured in each of the 10 cross-sectional images, and an average of measurements in the 10 cross-sectional images was calculated to determine a thickness t (mm) of the fiber structure. In a case of a fiber structure or fiber sheet without projections, a distance from one surface to the other surface in a thickness direction thereof was measured in each of the 10 cross-sectional images, and an average of measurements in the 10 cross-sectional images was calculated as a thickness (mm) of the fiber structure or fiber sheet.

Projection Height

In each cross-sectional image used for measuring the thickness as described above, a surface with projections (in a case where both surfaces have projections, a surface with acuter or higher projections) was defined as a subject surface. With a reference length (a cut length in a width direction) set to 4.0 mm, a longest one of distances from height of top 1 to the height of bottoms 2 of the projections in the thickness direction (Y direction) was measured in each of the 10 cross-sectional images, and an average of measurements in the 10 cross-sectional images was calculated as a projection height h (mm).

Projection Density

An image of a cross section of a fiber structure or fiber sheet which was parallel to an MD was taken at a magnification of 50 times using a microscope, and a linear line was drawn in a direction (X direction) perpendicular to a thickness direction (Y direction) at a position lower by a distance (height) equal to 1/3 of an average thickness calculated as above from a highest one of tops of projections. The number of projections extending outward beyond the line per 1 cm in MD was determined as "unit projection number in MD." The number of projections in a cross-section parallel to a CD direction was determined in a similar manner as "unit projection number in CD." A product of these numbers was calculated as a density of the projections per 1 $cm^2$.

Filtration Performance After Electrification

In accordance with JIS T 8151, a fiber structure obtained in each of Examples and Comparative Examples was evaluated in terms of filtration performance after electrification, using a filter evaluation apparatus (AP-6310FP, manufactured by SIBATA SCIENTIFIC TECHNOLOGY LTD.). First, a test sample (a round piece having a diameter of 110 mm) was attached to a measurement cell having a filtration surface having a diameter of 86 mm. In this state, an air flow containing NaCl particles having an average particle size of 0.1 μm as test particles was introduced for 1 minute at an air flow rate of 20 L/min and a face velocity of 5.7 cm/sec into the measurement cell in which the test sample was set. An upstream particle concentration X1 and a downstream (post-filtration) particle concentration X2 were measured using a light scattering mass concentration analyzer, and a filtering efficiency was calculated by the following formula.

$$\text{Filtering efficiency (\%)} = [(X1 - X2) / X1] \times 100$$

A micro differential pressure gauge was arranged between an upstream side and a downstream side of the measurement cell in the filter evaluation apparatus to measure a differential pressure (i.e., pressure loss (Pa)) at a flow rate of 20 L/min.

A QF value was calculated by the following formula from the obtained filtering efficiency and pressure loss.

$$\text{QF value} = -\ln(1 - \text{filtering efficiency (\%)} / 100) / \text{pressure loss (Pa)}$$

Filtration Performance After Destaticization

A fiber structure was subjected to destaticization in accordance with JIS B 9908 and was evaluated in terms of filtration performance using a filter evaluation apparatus (AP-6310FP, manufactured by SIBATA SCIENTIFIC TECHNOLOGY LTD.) in accordance with JIS T 8151 to determine filtration performance of the obtained fiber structure after

destaticization. The obtained fiber structure was immersed in a solution of isopropyl alcohol for 2 minutes, and then was taken out and dried in the air for 24 hours to give a test sample. A filtering efficiency (%), a pressure loss (Pa), and a QF value of the test piece were determined as filtration performance after destaticization in the same manner as the above-described evaluation of filtration performance after electrification, except for using the test sample.

Filtration Performance After Heating at 100°C

A sample (15 cm × 15 cm) of a fiber structure after electrification was prepared for each of Examples 7 and 8 as well as Comparative Examples 1 to 3 and 7 to 13. The sample was placed for 48 hours in an oven heated to 100°C and then was cooled to room temperature. The fiber structure after heating was evaluated in terms of filtration performance using a filter evaluation apparatus (AP-6310FP, manufactured by SIBATA SCIENTIFIC TECHNOLOGY LTD.) in accordance with JIS T 8151 to determine filtration performance of the obtained fiber structure after heating at 100°C.

Heat Resistance at 200°C

A sample (15 cm × 15 cm) of a fiber structure was prepared for each of Examples 7 and 8 as well as Comparative Examples 1 to 3 and 7 to 13. The sample was placed for 3 hours in an oven heated to 200°C, and a state of the sample after 3 hours was evaluated by visual inspection as follows:

Good: the sample maintained a shape same or substantially same as that before heating, with no fusion of fibers; or
Bad: the sample melted and was deformed as compared with a shape before heating.

Fluffing Occurrence

An obtained sheet was cut to a piece of 15 cm × 15 cm. Each of the participants as test panel was asked to softly rub a surface on the side of an ultrafine fiber layer, and a fluffing state after rubbing was evaluated by visual inspection on 5 levels in accordance with the following criteria. The number of the participants was 10. An average of evaluations in accordance with the following criteria was calculated.

5: No fluffing
4: Little fluffing
3: Some fluffing
2: Much fluffing
1: Considerable fluffing

Example 1

(1) Preparation of Ultrafine Fiber Layer

Using a general meltblowing machine, 100 parts by mass of a polypropylene (MFR [230°C, 21.18 N load] = 700 g/10 min) was meltblown-spun under a condition of a spinning temperature of 215°C, an air temperature of 215°C, an air flow rate of 10 $Nm^3$/min, a single hole discharge rate of 0.036 g/hole·min, a collection distance of 11 cm, a hole diameter of 0.3 mm, and a hole interval of 0.75 mm to give an ultrafine fiber sheet (having a number average single fiber diameter of 1.2 $\mu$m, a basis weight of 10.0 g/$m^2$, a thickness of 0.10 mm, and an apparent density of 0.10 g/$cm^3$).

(2) Preparation of Non-Ultrafine Fiber Layer

Using a general meltblowing machine, 100 parts by mass of a polypropylene (MFR [230°C, 21.18 N load] = 30 g/10 min) was discharged through nozzle holes under a condition of a spinning temperature of 260°C, an air temperature of 260°C, an air flow rate of 13 $Nm^3$/min, a single hole discharge rate of 0.3 g/hole·min, a hole diameter of 0.4 mm, and a hole interval of 1.5 mm; followed by application of hot air to discharged fibers so as to make them finer, and then fibers in the hot air stream were collected at a collection distance of 32 cm on a roll with a conveyor net (a balanced type; a width pitch of 5 mm × a length pitch of 5 mm × a thickness of 5 mm; a wire diameter of 1 mm) wound thereon to give a non-ultrafine fiber sheet having projections on one surface thereof (having a number average single fiber diameter of 7.23 $\mu$m, a basis weight of 20.0 g/$m^2$, a thickness of 0.76 mm, an apparent density of 0.03 g/$cm^3$, a projection height of 0.30 mm, and a projection density of 23 projections/$cm^2$).

(3) Entangling Treatment of Ultrafine Fiber Layer and Non-Ultrafine Fiber Layer

Next, the ultrafine fiber sheet obtained in the process (1) and the non-ultrafine fiber sheet obtained in the process (2) were overlaid on one another, with the ultrafine fiber sheet placed on a projection-located side of the non-ultrafine fiber sheet to give a layered body. The layered body was placed on a porous support (an aperture ratio of 25% and a hole diameter of 0.3 mm), and the layered body was continuously transferred at a speed of 5.0 m/min in a longitudinal direction of the layered body, while high-pressure water jets were injected from the side of the non-ultrafine fiber layer using two nozzles (distance between the adjacent nozzles: 20.0 cm) having orifices each having a hole diameter of 0.10 mm at intervals of 0.6 mm in a width direction of the layered body, with a first row of the nozzles injecting the high-pressure water jets at a water pressure of 2.0 MPa and a second row of the nozzles injecting the high-pressure water jets at a water pressure of 3.0 MPa, to perform entangling treatment to give a fiber structure. Next, the fiber structure in which the ultrafine fibers and the non-ultrafine fibers were unitedly intermingled was subjected to electrification by hydrocharging process. Specific conditions for the hydrocharging process were as follows:

- Solvent used: water,
- Water pressure: 0.4 MPa,
- Suction pressure: 2000 mm $H_2O$, and
- Process time: 0.0042 second (speed: 20 m/min).

Tables 5 and 6 show results of various evaluations of the obtained fiber structure.

Example 2

An ultrafine fiber sheet obtained in the process (1) of Example 1 and a non-ultrafine fiber sheet obtained in the process (2) of Example 1 were overlaid on one another, with the ultrafine fiber sheet placed on a projection-located side of the non-ultrafine fiber sheet to give a layered body. The layered body was placed on the porous support used in Example 1, and the layered body was continuously transferred at a speed of 5.0 m/min in a longitudinal direction of the layered body, while high-pressure water jets were injected from the side of the non-ultrafine fiber layer using two nozzles (distance between the adjacent nozzles: 20,0 cm) having orifices each having a hole diameter of 0.10 mm at intervals of 0.6 mm in a width direction of the layered body, with a first row of the nozzles injecting the high-pressure water jets at a water pressure of 3.0 MPa and a second row of the nozzles injecting the high-pressure water jets at a water pressure of 5.0 MPa, to perform entangling treatment to give a fiber structure. Next, as with Example 1, the fiber structure in which the ultrafine fibers and the non-ultrafine fibers were unitedly intermingled was subjected to electrification. Tables 5 and 6 show results of various evaluations of the obtained fiber structure.

Example 3

An ultrafine fiber sheet obtained in the process (1) of Example 1 and a non-ultrafine fiber sheet obtained in the process (2) of Example 1 were overlaid on one another, with the ultrafine fiber sheet placed on a projection-located side of the non-ultrafine fiber sheet to give a layered body. The layered body was placed on the porous support used in Example 1, and the layered body was continuously transferred at a speed of 5.0 m/min in a longitudinal direction of the layered body, while high-pressure water jets were injected from the side of the non-ultrafine fiber layer using three nozzles (distance between the adjacent nozzles: 20.0 cm) having orifices each having a hole diameter of 0.10 mm at intervals of 0.6 mm in a width direction of the layered body, with a first row of the nozzles injecting the high-pressure water jets at a water pressure of 3.0 MPa, a second row of the nozzles injecting the high-pressure water jets at a water pressure of 5.0 MPa and a third row of the nozzles injecting the high-pressure water jets at a water pressure of 7.0 MPa, to perform entangling treatment to give a fiber structure. Next, as with Example 1, the fiber structure in which the ultrafine fibers and the non-ultrafine fibers were unitedly intermingled was subjected to electrification. Tables 5 and 6 show results of various evaluations of the obtained fiber structure.

Example 4

(1) Preparation of Ultrafine Fiber Layer

Using a general meltblowing machine, 100 parts by mass of a polypropylene (MFR [230°C, 21.18 N load] = 700 g/10 min) was meltblown-spun under a condition of a spinning temperature of 215°C, an air temperature of 215°C, an air flow rate of 10 $Nm^3$/min, a single hole discharge rate of 0.036 g/hole·min, a collection distance of 11 cm, a hole diameter of 0.3 mm, and a hole interval of 0.75 mm to give an ultrafine fiber sheet (having a number average single fiber

diameter of 1.2 μm, a basis weight of 5.0 g/m$^2$, a thickness of 0.06 mm, and an apparent density of 0.08 g/cm$^3$).

(2) Entangling Treatment of Ultrafine Fiber Layer and Non-Ultrafine Fiber Layer

The ultrafine fiber sheet obtained in the process (1) of Example 4 and a non-ultrafine fiber sheet obtained in the process (2) of Example 1 were overlaid on one another, with the ultrafine fiber sheet placed on a projection-located side of the non-ultrafine fiber sheet to give a layered body. The layered body was placed on the porous support used in Example 1, and the layered body was continuously transferred at a speed of 5.0 m/min in a longitudinal direction of the layered body, while high-pressure water jets were injected from the side of the non-ultrafine fiber layer using three nozzles (distance between the adjacent nozzles: 20.0 cm) having orifices each having a hole diameter of 0.10 mm at intervals of 0.6 mm in a width direction of the layered body, with a first row of the nozzles injecting the high-pressure water jets at a water pressure of 3.0 MPa, a second row of the nozzles injecting the high-pressure water jets at a water pressure of 5.0 MPa and a third row of the nozzles injecting the high-pressure water jets at a water pressure of 7.0 MPa, to perform entangling treatment to give a fiber structure. Next, as with Example 1, the fiber structure in which the ultrafine fibers and the non-ultrafine fibers were unitedly intermingled was subjected to electrification. Tables 5 and 6 show results of various evaluations of the obtained fiber structure.

Example 5

(1) Preparation of Non-Ultrafine Fiber Layer

Using a general meltblowing machine, 100 parts by mass of a polypropylene (MFR [230°C, 21.18 N load] = 30 g/10 min) was discharged through nozzle holes under a condition of a spinning temperature of 260°C, an air temperature of 260°C, an air flow rate of 13 Nm$^3$/min, a single hole discharge rate of 0.3 g/hole·min, a hole diameter of 0.4 mm, and a hole interval of 1.5 mm; followed by application of hot air to discharged fibers so as to make them finer, and then fibers in the hot air stream were collected at a collection distance of 32 cm on a roll with a conveyor net (a balanced type; a width pitch of 5 mm × a length pitch of 5 mm × a thickness of 5 mm; a wire diameter of 1 mm) wound thereon to give a non-ultrafine fiber sheet having projections on one surface thereof (having a number average single fiber diameter of 7.23 μm, a basis weight of 30.0g/m$^2$, a thickness of 0.78 mm, an apparent density of 0.04 g/cm$^3$, a projection height of 0.21 mm, and a projection density of 23 projections/cm$^2$).

(2) Entangling Treatment of Ultrafine Fiber Layer and Non-Ultrafine Fiber Layer

An ultrafine fiber sheet obtained in the process (1) of Example 1 and the non-ultrafine fiber sheet obtained in the process (1) of Example 5 were overlaid on one another, with the ultrafine fiber sheet placed on a projection-located side of the non-ultrafine fiber sheet to give a layered body. The layered body was placed on the porous support used in Example 1, and the layered body was continuously transferred at a speed of 5.0 m/min in a longitudinal direction of the layered body, while high-pressure water jets were injected from the side of the non-ultrafine fiber layer using three nozzles (distance between the adjacent nozzles: 20.0 cm) having orifices each having a hole diameter of 0.10 mm at intervals of 0.6 mm in a width direction of the layered body, with a first row of the nozzles injecting the high-pressure water jets at a water pressure of 3.0 MPa, a second row of the nozzles injecting the high-pressure water jets at a water pressure of 5.0 MPa and a third row of the nozzles injecting the high-pressure water jets at a water pressure of 7.0 MPa, to perform entangling treatment to give a fiber structure. Next, as with Example 1, the fiber structure in which the ultrafine fibers and the non-ultrafine fibers were unitedly intermingled was subjected to electrification. Tables 5 and 6 show results of various evaluations of the obtained fiber structure.

Example 6

(1) Preparation of Ultrafine Fiber Layer

Using a general meltblowing machine, 100 parts by mass of an amorphous polyetherimide having a melt viscosity of 900 Pa·s at 330°C was meltblown-spun under a condition of a spinning temperature of 420°C, an air temperature of 420°C, an air flow rate of 10 Nm$^3$/min, a single hole discharge rate of 0.036 g/hole·min, a collection distance of 10 cm, a hole diameter of 0.3 mm, and a hole interval of 0.75 mm to give an ultrafine fiber sheet (having a number average single fiber diameter of 1.2 μm, a basis weight of 10.0g/m$^2$, a thickness of 0.12 mm, and an apparent density of 0.08 g/cm$^3$).

(2) Preparation of Non-Ultrafine Fiber Layer

Using a general meltblowing machine, 100 parts by mass of an amorphous polyetherimide having a melt viscosity of 900 Pa·s at 330°C was discharged through nozzle holes under a condition of a spinning temperature of 420°C, an air temperature of 420°C, an air flow rate of 13 $Nm^3$/min, a single hole discharge rate of 0.3 g/hole·min, a hole diameter of 0.4 mm, and a hole interval of 1.5 mm; followed by application of hot air to discharged fibers so as to make them finer, and the fibers in the hot air stream were collected at a collection distance of 7 cm on a roll with a conveyor net (a balanced type; a width pitch of 5 mm × a length pitch of 5 mm × a thickness of 5 mm; a wire diameter of 1 mm) wound thereon to give a non-ultrafine fiber sheet having projections on a surface thereof (having a number average single fiber diameter of 8.1 μm, a basis weight of 20.0 g/$m^2$, a thickness of 0.75 mm, an apparent density of 0.03 g/$cm^3$, a projection height of 0.29 mm, and a projection density of 23 projections/$cm^2$).

(3) Entangling Treatment of Ultrafine Fiber Layer and Non-Ultrafine Fiber Layer

Next, the ultrafine fiber sheet obtained in the process (1) and the non-ultrafine fiber sheet obtained in the process (2) were overlaid on one another, with the ultrafine fiber sheet placed on a projection-located side of the non-ultrafine fiber sheet to give a layered body. The layered body was placed on the porous support (an aperture ratio of 25% and a hole diameter of 0.3 mm) used in Example 1, and the layered body was continuously transferred at a speed of 5.0 m/min in a longitudinal direction of the layered body, while high-pressure water jets were injected from the side of the non-ultrafine fiber layer using three nozzles (distance between the adjacent nozzles: 20.0 cm) having orifices each having a hole diameter of 0.10 mm at intervals of 0.6 mm in a width direction of the layered body, with a first row of the nozzles injecting the high-pressure water jets at a water pressure of 3.0 MPa, a second row of the nozzles injecting the high-pressure water jets at a water pressure of 5.0 MPa and a third row of the nozzles injecting the high-pressure water jets at a water pressure of 7.0 MPa, to perform entangling treatment to give a fiber structure. Next, as with Example 1, the fiber structure in which the ultrafine fibers and the non-ultrafine fibers were unitedly intermingled was subjected to electrification. Tables 5 and 6 show results of various evaluations of the obtained fiber structure.

Example 7

(1) Preparation of Ultrafine Fiber Layer

Using a general meltblowing machine, 100 parts by mass of a fully aromatic polyester capable of forming liquid crystal in melt phase comprising a copolymerization product of para-hydroxybenzoic acid and 6-hydroxy-2-naphthoic acid and having a glass transition temperature of 193°C, a melting point of 300°C and a melt viscosity of 15 Pa·s at 310°C (Vectra-L type; an LCP available from Polyplastics Co., Ltd.) was meltblown-spun under a condition of a spinning temperature of 310°C, an air temperature of 310°C, an air flow rate of 10 $Nm^3$/min, a single hole discharge rate of 0.036 g/hole·min, a collection distance of 10 cm, a hole diameter of 0.3 mm, and a hole interval of 0.75 mm to give an ultrafine fiber sheet (having a number average single fiber diameter 1.1 μm, a basis weight of 10.0 g/$m^2$, a thickness of 0.10 mm, and an apparent density of 0.10 g/$cm^3$).

(2) Preparation of Non-Ultrafine Fiber Layer

Using a general meltblowing machine, 100 parts by mass of a fully aromatic polyester capable of forming liquid crystal in melt phase comprising a copolymerization product of para-hydroxybenzoic acid and 6-hydroxy-2-naphthoic acid and having a glass transition temperature of 193°C, a melting point of 300°C and a melt viscosity of 15 Pa·s at 310°C (Vectra-L type; an LCP available from Polyplastics Co., Ltd.) was discharged through nozzle holes under a condition of a spinning temperature of 310°C, an air temperature of 310°C, an air flow rate of 13 $Nm^3$/min, a single hole discharge rate of 0.3 g/hole·min, a hole diameter of 0.4 mm, a hole interval of 1.5 mm; followed by application of hot air to discharged fibers so as to make them finer, and then fibers in the hot air stream were collected at a collection distance of 7 cm on a roll with a conveyor net (a balanced type; a width pitch of 5 mm × a length pitch of 5 mm × a thickness of 5 mm; a wire diameter of 1 mm) wound thereon to give a non-ultrafine fiber sheet having projections on a surface thereof (having a number average single fiber diameter of 9.3 μm, a basis weight of 20.0 g/$m^2$, a thickness of 0.78 mm, an apparent density of 0.03 g/$cm^3$, a projection height of 0.30 mm, and a projection density of 23 projections/$cm^2$).

(3) Entangling Treatment of Ultrafine Fiber Layer and Non-Ultrafine Fiber Layer

Next, the ultrafine fiber sheet obtained in the process (1) and the non-ultrafine fiber sheet obtained in the process (2) were overlaid on one another, with the ultrafine fiber sheet placed on a projection-located side of the non-ultrafine

fiber sheet to give a layered body. The layered body was placed on the porous support used in Example 1, and the layered body was continuously transferred at a speed of 5.0 m/min in a longitudinal direction of the layered body, while high-pressure water jets were injected from the side of the non-ultrafine fiber layer using three nozzles (distance between the adjacent nozzles: 20.0 cm) having orifices each having a hole diameter of 0.10 mm at intervals of 0.6 mm in a width direction of the layered body, with a first row of the nozzles injecting the high-pressure water jets at a water pressure of 3.0 MPa, a second row of the nozzles injecting the high-pressure water jets at a water pressure of 5.0 MPa and a third row of the nozzles injecting the high-pressure water jets at a water pressure of 7.0 MPa, to perform entangling treatment to give a fiber structure. Next, as with Example 1, the fiber structure in which the ultrafine fibers and the non-ultrafine fibers were unitedly intermingled was subjected to electrification. Tables 5 and 6 show results of various evaluations of the obtained fiber structure.

Comparative Example 1

Using a general meltblowing machine, 100 parts by mass of a polypropylene (MFR [230°C, 21.18 N load] = 700 g/10 min) was meltblown-spun under a condition of a spinning temperature of 215°C, an air temperature of 215°C, an air flow rate of 10 $Nm^3$/min, a single hole discharge rate of 0.036 g/hole·min, a collection distance of 11 cm, a hole diameter of 0.3 mm, and a hole interval of 0.75 mm to give an ultrafine fiber sheet (having a number average single fiber diameter of 1.2 μm, a basis weight of 10.0 $g/m^2$, a thickness of 0.10 mm, and an apparent density of 0.10 $g/cm^3$) as a fiber structure. Electrification was performed as with Example 1 to the fiber structure including the ultrafine fiber sheet only. Tables 7 and 8 show results of various evaluations of the obtained fiber structure.

Comparative Example 2

Using a general meltblowing machine, 100 parts by mass of a polypropylene (MFR [230°C, 21.18 N load] = 30 g/10 min) was discharged as fibers through nozzle holes under a condition of a spinning temperature of 260°C, an air temperature of 260°C, an air flow rate of 13 $Nm^3$/min, a single hole discharge rate of 0.3 g/hole·min, a hole diameter of 0.4 mm, and a hole interval of 1.5 mm, followed by application of hot air to discharged fibers so as to make them finer, and then fibers in the hot air stream were collected at a collection distance of 32 cm on a roll with a conveyor net (a balanced type; a width pitch of 5 mm × a length pitch of 5 mm × a thickness of 5 mm; a wire diameter of 1 mm) wound thereon to give a non-ultrafine fiber sheet having projections on one surface thereof (having a number average single fiber diameter of 7.23 μm, a basis weight of 20.0 $g/m^2$, a thickness of 0.76 mm, an apparent density of 0.03 $g/cm^3$, a projection height of 0.30 mm, and a projection density of 23 projections/$cm^2$) as a fiber structure. Electrification was performed as with Example 1 to the fiber structure including the non-ultrafine fiber sheet only. Tables 7 and 8 show results of various evaluations of the obtained fiber structure.

Comparative Example 3

An ultrafine fiber sheet obtained in Comparative Example 1 and a non-ultrafine fiber sheet obtained in Comparative Example 2 were overlaid on one another, with the ultrafine fiber sheet placed on a projection-located side of the non-ultrafine fiber sheet to give a layered body. Electrification was performed as with Example 1 to the layered body as a fiber structure. Tables 7 and 8 show results of various evaluations of the obtained fiber structure.

Comparative Example 4

Using a general meltblowing machine, 100 parts by mass of a polypropylene (MFR [230°C, 21.18 N load] = 700 g/10 min) was meltblown-spun under a condition of a spinning temperature of 215°C, an air temperature of 215°C, an air pressure of 0.4 MPa, a single hole discharge rate of 0.1 g/hole·min, a collection distance of 30 cm, 400 spinning holes at a spinneret, a hole diameter of 0.3 mm, and a hole interval of 0.6 mm (single row arrangement) to give an ultrafine fiber sheet (having a number average single fiber diameter of 2.5 μm, a basis weight of 10.0 $g/m^2$, a thickness of 0.11 mm, and an apparent density of 0.10 $g/cm^3$) as a fiber structure. Electrification was performed as with Example 1 to the fiber structure including the ultrafine fiber sheet only. Tables 7 and 8 show results of various evaluations of the obtained fiber structure.

Comparative Example 5

A semi-random web was produced by a carding process from a raw material containing 70 wt% of polypropylene fibers (NF, available from UBE EXSYMO CO., LTD.) having a number average single fiber diameter of 17.5 μm and 30 wt% of PET fibers (T201, available from Toray Industries, Inc.) having a number average single fiber diameter of 24.6

μm. Next, the obtained semi-random web was placed on a punching drum support having an aperture ratio of 25% and a hole diameter of 0.3 mm, and the semi-random web was continuously transferred at a speed of 5.0 m/min in a longitudinal direction of the semi-random web, while high-pressure water jets were injected from above to perform entangling treatment to produce an entangled fiber web (a nonwoven fabric). In this entangling treatment, spunlacing was performed using two nozzles (distance between the adjacent nozzles: 20.0 cm) having orifices each having a hole diameter of 0.10 mm at intervals of 0.6 mm in a width direction of the web, with a first row of the nozzles injecting the high-pressure water jets at a water pressure of 3.0 MPa and a second row of the nozzles injecting the high-pressure water jets at a water pressure of 5.0 MPa. Further, the web was reversed and was subjected to the same entangling treatment to give a non-ultrafine fiber sheet (having a number average single fiber diameter of 19.1 μm, a basis weight of 35.0 g/$m^2$, a thickness of 0.45 mm, and an apparent density of 0.08 g/$cm^3$) as a fiber structure. Electrification was performed as with Example 1 to the fiber structure including the non-ultrafine fiber sheet only. Tables 7 and 8 show results of various evaluations of the obtained fiber structure.

Comparative Example 6

An ultrafine fiber sheet obtained in Comparative Example 4 and a non-ultrafine fiber sheet obtained in Comparative Example 5 were overlaid on one another to give a layered body. Electrification was performed as with Example 1 to the layered body as a fiber structure. Tables 7 and 8 show results of various evaluations of the obtained fiber structure.

Comparative Example 7

Using a general meltblowing machine, 100 parts by mass of an amorphous polyetherimide having a melt viscosity of 900 Pa·s at 330°C was meltblown-spun under a condition of a spinning temperature of 420°C, an air temperature of 420°C, an air flow rate of 10 N$m^3$/min, a single hole discharge rate of 0.036 g/hole·min, a collection distance of 10 cm, a hole diameter of 0.3 mm, and a hole interval of 0.75 mm to give an ultrafine fiber sheet (having a number average single fiber diameter of 1.2 μm, a basis weight of 10.0 g/$m^2$, a thickness of 0.12 mm, and an apparent density of 0.08 g/$cm^3$) as a fiber structure. Electrification was performed as with Example 1 to the fiber structure including the ultrafine fiber sheet only. Tables 7 and 8 show results of various evaluations of the obtained fiber structure.

Comparative Example 8

Using a general meltblowing machine, 100 parts by mass of an amorphous polyetherimide having a melt viscosity of 900 Pa·s at 330°C was discharged as fibers through nozzle holes under a condition of a spinning temperature of 420°C, an air temperature of 420°C, an air flow rate of 13 N$m^3$/min, a single hole discharge rate of 0.3 g/hole·min, a hole diameter of 0.4 mm, and a hole interval of 1.5 mm; followed by application of hot air to discharged fibers so as to make them finer, and then fibers in the hot air stream were collected at a collection distance of 7 cm on a roll with a conveyor net (a balanced type; a width pitch of 5 mm × a length pitch of 5 mm × a thickness of 5 mm; a wire diameter of 1 mm) wound thereon to give a non-ultrafine fiber sheet having projections on a surface thereof (having a number average single fiber diameter of 8.1 μm, a basis weight of 20.0 g/$m^2$, a thickness of 0.75 mm, an apparent density of 0.03 g/$cm^3$, a projection height of 0.29 mm, and a projection density of 23 projections/$cm^2$) as a fiber structure. Electrification was performed as with Example 1 to the fiber structure including the non-ultrafine fiber sheet only. Tables 7 and 8 show results of various evaluations of the obtained fiber structure.

Comparative Example 9

An ultrafine fiber sheet obtained in Comparative Example 7 and a non-ultrafine fiber sheet obtained in Comparative Example 8 were overlaid on one another, with the ultrafine fiber sheet placed on a projection-located side of the non-ultrafine fiber sheet to give a layered body. Electrification was performed as with Example 1 to the layered body as a fiber structure. Tables 7 and 8 show results of various evaluations of the obtained fiber structure.

Comparative Example 10

Using a general meltblowing machine, 100 parts by mass of a fully aromatic polyester capable of forming liquid crystal in melt phase comprising a copolymerization product of para-hydroxybenzoic acid and 6-hydroxy-2-naphthoic acid and having a glass transition temperature of 193°C, a melting point of 300°C and a melt viscosity of 15 Pa·s at 310°C (Vectra-L type; an LCP available from Polyplastics Co., Ltd.) was meltblown-spun under a condition of a spinning temperature of 310°C, an air temperature of 310°C, an air flow rate of 10 N$m^3$/min, a single hole discharge rate of 0.036 g/hole·min, a collection distance of 10 cm, a hole diameter of 0.3 mm, and a hole interval of 0.75 mm to give an ultrafine

fiber sheet (having a number average single fiber diameter of 1.1 μm, a basis weight of 10.0 $g/m^2$, a thickness of 0.10 mm, an apparent density of 0.10 $g/cm^3$) as a fiber structure. Electrification was performed as with Example 1 to the fiber structure including the ultrafine fiber sheet only. Tables 7 and 8 show results of various evaluations of the obtained fiber structure.

Comparative Example 11

Using a general meltblowing machine, 100 parts by mass of a fully aromatic polyester capable of forming liquid crystal in melt phase comprising a copolymerization product of para-hydroxybenzoic acid and 6-hydroxy-2-naphthoic acid and having a glass transition temperature of 193°C, a melting point of 300°C and a melt viscosity of 15 Pa·s at 310°C (Vectra-L type; an LCP available from Polyplastics Co., Ltd.) was discharged as fibers through nozzle holes under a condition of a spinning temperature of 310°C, an air temperature of 310°C, an air flow rate of 13 $Nm^3/min$, a single hole discharge rate of 0.3 g/hole •min, a hole diameter of 0.4 mm, and a hole interval of 1.5 mm; followed by application of hot air to discharged fibers so as to make them finer, and then fibers in the hot airstream were collected at a collection distance of 7 cm on a roll with a conveyor net (a balanced type; a width pitch of 5 mm × a length pitch of 5 mm × a thickness of 5 mm; a wire diameter of 1 mm) wound thereon to give a non-ultrafine fiber sheet having projections on a surface thereof (having a number average single fiber diameter of 9.3 μm, a basis weight of 20.0 $g/m^2$, a thickness of 0.78 mm, an apparent density of 0.03 $g/cm^3$, a projection height of 0.30 mm, and a projection density of 23 $projections/cm^2$) as a fiber structure. Electrification was performed as with Example 1 to the fiber structure including the non-ultrafine fiber sheet only.

Tables 7 and 8 show results of various evaluations of the obtained fiber structure.

Comparative Example 12

An ultrafine fiber sheet obtained in Comparative Example 10 and a non-ultrafine fiber sheet obtained in Comparative Example 11 were overlaid on one another to give a layered body. Electrification was performed as with Example 1 to the layered body as a fiber structure. Tables 7 and 8 show results of various evaluations of the obtained fiber structure.

Comparative Example 13

An ultrafine fiber sheet obtained in the process (1) of Example 1 and a non-ultrafine fiber sheet obtained in the process (2) of Example 1 were overlaid on one another, with the ultrafine fiber sheet placed on a projection-located side of the non-ultrafine fiber sheet to give a layered body. The layered body was placed on the porous support used in Example 1, and the layered body was continuously transferred at a speed of 5.0 m/min in a longitudinal direction of the layered body, while high-pressure water jets were injected from the side of the non-ultrafine fiber layer using one nozzle having orifices each having a hole diameter of 0.10 mm at intervals of 0.60 mm in a width direction of the layered body, with the nozzle injecting the high-pressure water jets at a water pressure of 1.0 MPa, to perform entangling treatment to give a fiber structure. In the fiber structure after the entangling treatment, the ultrafine fiber layer and the non-ultrafine fiber layer were separated with a clear interface therebetween, and the ultrafine fibers and the non-ultrafine fibers were not unitedly intermingled. Next, electrification was performed as with Example 1 to the fiber structure in which the ultrafine fibers and the non-ultrafine fibers were layered. Tables 7 and 8 show results of various evaluations of the obtained fiber structure.

Table 5

| Conditions in production of fiber structure | | Unit | Ex. 1 | Ex. 2 | Ex. 3 | Ex. 4 | Ex. 5 | Ex. 6 | Ex. 7 |
|---|---|---|---|---|---|---|---|---|---|
| Ultrafine fiber layer | | | | | | | | | |
| Polymer | | | PP | PP | PP | PP | PP | PEI | LCP |
| Number average fiber diameter | | μm | 1.2 | 1.2 | 1.2 | 1.2 | 1.2 | 1.2 | 1.1 |
| Basis weight | | $g/m^2$ | 10.0 | 10.0 | 10.0 | 5.0 | 10.0 | 10.0 | 10.0 |
| Thickness | | mm/layer | 0.10 | 0.10 | 0.10 | 0.06 | 0.10 | 0.12 | 0.10 |
| Apparent density | | $g/cm^3$ | 0.10 | 0.10 | 0.10 | 0.08 | 0.10 | 0.08 | 0.10 |
| Non-ultrafine fiber layer | | | | | | | | | |
| Polymer | | | PP | PP | PP | PP | PP | PEI | LCP |
| Number average fiber diameter | | μm | 7.23 | 7.23 | 7.23 | 7.23 | 7.23 | 8.1 | 9.3 |
| Basis weight | | $g/m^2$ | 20.0 | 20.0 | 20.0 | 20.0 | 30.0 | 20.0 | 20.0 |
| Thickness | | mm/layer | 0.76 | 0.76 | 0.76 | 0.76 | 0.78 | 0.75 | 0.78 |
| Apparent density | | $g/cm^3$ | 0.03 | 0.03 | 0.03 | 0.03 | 0.04 | 0.03 | 0.03 |
| Projections | Height | mm | 0.30 | 0.30 | 0.30 | 0.30 | 0.21 | 0.29 | 0.30 |
| | Density | projections/$cm^2$ | 23 | 23 | 23 | 23 | 23 | 23 | 23 |
| Condition in entanglement | | | | | | | | | |
| Water pressure | | MPa | 2.0-3.0 | 13.0-5.0 | 3.0-5.0-7.0 | 3.0-5.0-7.0 | 3.0-5.0-7.0 | 3.0-5.0-7.0 | 3.0-5.0-7.0 |

Table 6

| Fiber structure | | Unit | Ex. 1 | Ex.2 | Ex.3 | Ex.4 | Ex.5 | Ex.6 | Ex.7 |
|---|---|---|---|---|---|---|---|---|---|
| Thickness | | mm/layer | 0.76 | 0.69 | 0.59 | 0.59 | 0.67 | 0.69 | 0.71 |
| Basis weight | | $g/m^2$ | 30.0 | 30.0 | 30.0 | 25.0 | 40.0 | 30.0 | 30.0 |
| Apparent density | | $g/cm^3$ | 0.04 | 0.04 | 0.05 | 0.04 | 0.06 | 0.04 | 0.04 |
| Ultrafine fiber occupancy | | % | 45.5 | 45.5 | 45.5 | 33.3 | 29.4 | 43.2 | 46.1 |
| Ultrafine fiber abundancy | Upper layer | % | 65.3 | 59.3 | 52.3 | 51.0 | 50.3 | 56.9 | 57.3 |
| | Lower layer | % | 34.7 | 40.7 | 47.7 | 49.0 | 49.7 | 43.1 | 42.7 |
| Projections | Height | mm | 0.30 | 0.26 | 0.21 | 0.20 | 0.19 | 0.25 | 0.24 |
| | Density | $projections/cm^2$ | 23 | 23 | 23 | 23 | 23 | 23 | 23 |
| After electrification | Filtering efficiency | % | 89.99 | 83.64 | 65.71 | 59.71 | 79.72 | 87.21 | 89.23 |
| | Pressure loss | Pa | 3 | 2 | 1 | 1 | 5 | 2 | 2 |
| | QF | | 0.77 | 0.91 | 1.07 | 0.91 | 0.32 | 1.03 | 1.11 |
| After destaticization | Filtering efficiency | % | 23.12 | 20.91 | 18.65 | 7.21 | 15.33 | 21.12 | 21.59 |
| | Pressure loss | Pa | 3 | 2 | 1 | 1 | 5 | 2 | 2 |
| | QF | | 0.09 | 0.12 | 0.21 | 0.09 | 0.03 | 0.12 | 2 0.12 |
| After heating at 100°C | Filtering efficiency | % | - | - | - | - | - | 80.01 | 81.30 |
| | Pressure loss | Pa | - | - | - | - | - | 2 | 2 |
| | QF | | - | - | - | - | - | 0.80 | 0.84 |
| Heat resistance at 200°C (3h) | | | - | - | - | - | - | Good | Good |
| Fluffing Occurrence | | | 5 | 5 | 5 | 5 | 5 | 5 | Good 5 |

Table 7

| Conditions in production of fiber structure | | Unit | Com. Ex. 1 | Com. Ex.2 | Com. Ex.3 | Com. Ex. 4 | Com. Ex. 5 | Com. Ex. 6 | Com. Ex. 7 | Com. Ex. 8 | Com. Ex. 9 | Com. Ex. 10 | Com. Ex.11 | Com. Ex. 12 | Com. Ex.13 |
|---|---|---|---|---|---|---|---|---|---|---|---|---|---|---|---|
| Ultrafine fiber layer | | | | | | | | | | | | | | | |
| Polymer | | | PP | - | PP | PP | - | PP | PEI | - | PEI | LCP | - | LCP | PP |
| Number average fiber diameter | | μm | 1.2 | - | 1.2 | 2.5 | - | 2.5 | 1.2 | - | 1.2 | 1.1 | - | 1.1 | 1.2 |
| Basis weight | | $g/m^2$ | 10.0 | - | 10.0 | 10.0 | - | 10.0 | 10.0 | - | 10.0 | 10.0 | - | 10.0 | 10.0 |
| Thickness | | mm/layer | 0.10 | - | 0.10 | 0.11 | - | 0.11 | 0.12 | - | 0.12 | 0.10 | - | 0.10 | 0.10 |
| Apparent density | | $g/cm^3$ | 0.10 | - | 0.10 | 0.10 | - | 0.10 | 0.08 | - | 0.08 | 0.10 | - | 0.10 | 0.10 |
| Non-ultrafine fiber layer | | | | | | | | | | | | | | | |
| Polymer | | | - | PP | PP | - | PP<br>PET | PP<br>PET | - | PEI | PEI | - | LCP | LCP | PP |
| Number average fiber diameter | | μm | - | 7.23 | 7.23 | - | 19.1 | 19.1 | - | 8.1 | 8.1 | - | 9.3 | 9.3 | 7.23 |
| Basis weight | | $g/m^2$ | - | 20.0 | 20.0 | - | 35.0 | 35.0 | - | 20.0 | 20.0 | - | 20.0 | 20.0 | 20.0 |
| Thickness | | mm/layer | - | 0.76 | 0.76 | - | 0.45 | 0.45 | - | 0.75 | 0.75 | - | 0.78 | 0.78 | 0.76 |
| Apparent density | | $g/cm^3$ | - | 0.03 | 0.03 | - | 0.08 | 0.08 | - | 0.03 | 0.03 | - | 0.03 | 0.03 | 0.03 |
| Projections | Height | mm | - | 0.30 | 0.30 | - | - | - | - | 0.29 | 0.29 | - | 0.30 | 0.30 | 0.30 |
| | Density | $projections/cm^2$ | - | 23 | 23 | - | - | - | - | 23 | 23 | - | 23 | 23 | 23 |
| Condition in entanglement | | | | | | | | | | | | | | | |
| Water pressure | | MPa | - | - | - | - | - | - | - | - | - | - | - | - | 1.0 |

Table 8

| Fiber structure | | Unit | Com. Ex. 1 | Com. Ex.2 | Com. Ex. 3 | Com. Ex.4 | Com. Ex.5 | Com. Ex.6 | Com. Ex.7 | Com. Ex. 8 | Com. Ex.9 | Com. Ex. 10 | Com. Ex. 11 | Com. Ex. 12 | Com. Ex. 13 |
|---|---|---|---|---|---|---|---|---|---|---|---|---|---|---|---|
| Thickness | | mm/layer | 0.10 | 0.76 | 0.86 | 0.11 | 0.45 | 0.58 | 0.12 | 0.75 | 0.87 | 0.10 | 0.78 | 0.88 | 0.83 |
| Basis weight | | $g/m^2$ | 10.0 | 20.0 | 30.0 | 10.0 | 35.0 | 45.0 | 10.0 | 20.0 | 30.0 | 10.0 | 20.0 | 30.0 | 30.0 |
| Apparent density | | $g/cm^3$ | 0.10 | 0.03 | 0.03 | 0.10 | 0.08 | 0.08 | 0.08 | 0.03 | 0.03 | 0.10 | 0.03 | 0.03 | 0.04 |
| Ultrafine fiber occupancy | | % | 100 | 0 | 45.5 | 100 | 0 | 45.5 | 100 | 0 | 43.2 | 100 | 0 | 46.1 | 45.5 |
| Ultrafine fiber | Upper layer | % | 50 | - | 100 | 50 | - | 100 | 50 | - | 100 | 50 | - | 100 | 95 |
| abundancy | Lower layer | % | 50 | - | 0 | 50 | - - | | | | | | | | |
| Projections | Height | mm | - | 0.30 | - | - | - | - | - | - 0.29 | - | 50 - | - 0.30 | 0 - | 5 |
| | Density | projections/ $cm^2$ | - | 23 | - | - | - | - | - | 23 | - | - | 23 | - | - |
| After electrification | Filtering efficiency | % | 91.93 | 21.37 | 93.85 | 88.87 | 18.89 | 89.11 | 90.32 | 20.35 | 92.11 | 91.35 | 22.11 | 93.17 | 90.12 |
| | Pressure loss | Pa | 8 | 0 | 8 | 10 | 0 | 11 | 8 | 0 | 8 | 8 | 0 | 8 | 9 |
| | QF | | 0.31 | - | 0.35 | 0.21 | - | 0.20 | 0.29 | - | 0.31 | 0.30 | - | 0.34 | 2 |
| After destaticization | Filtering efficiency | % | 14.53 | 0 | 16.31 | 20.15 | 0.05 | 21.50 | 15.03 | 0 | 17.31 | 14.93 | 0 | 17.54 | 18.53 |
| | Pressure loss | Pa | 8 | 0 | 8 | 10 | 0 | 11 | 8 | 0 | 8 | 8 | 0 | 8 | 9 |
| | QF | | 0.02 | - | 0.02 | 0.02 | - | 0.02 | 0.02 | - | 0.02 | 0.02 | - | 0.02 | 0.02 |
| After heating at 100°C | Filtering efficiency | % | 64.39 | 13.21 | 66.11 | - | - | - | 82.28 | 18.15 | 83.01 | 82.25 | 19.89 | 83.94 | 58.26 |
| | Pressure loss | Pa | | 0 | 8 | - | - | | | | | | | | |
| | QF | | 8 0.13 | | 0.14 | - | - | - - | 8 0.21 | 0 | 8 0.22 | 8 0.21 | 0 | 8 0.23 | 8 |
| Heat resistance at 200°C (3h) | | | Poor | Poor | Poor | | | | Good | Good | Good | Good | Good | Good | 0.11 Poor |

(continued)

| Fiber structure | Unit | Com. Ex. 1 | Com. Ex.2 | Com. Ex. 3 | Com. Ex.4 | Com. Ex.5 | Com. Ex.6 | Com. Ex.7 | Com. Ex. 8 | Com. Ex.9 | Com. Ex. 10 | Com. Ex. 11 | Com. Ex. 12 | Com. Ex. 13 |
|---|---|---|---|---|---|---|---|---|---|---|---|---|---|---|
| Fluffing Occurrence | | 1 | 5 | 1 | 1 | 3 | 1 | 1 | 5 | 1 | 1 | 5 | 1 | 4 |

As shown in Tables 7 and 8, Comparative Examples 1, 4, 7 and 10 each comprising the ultrafine fiber sheet singly as well as Comparative Examples 3, 6, 9 and 12 each comprising the ultrafine fiber sheet and the non-ultrafine fiber sheet only overlaid without the entangling treatment show large pressure losses of 8 Pa or higher, although they have high filtration efficiencies. Further, they are poor in fluffing evaluation with much fluffing.

Comparative Examples 2, 5, 8 and 11 each comprising the non-ultrafine fiber sheet singly show extremely small pressure losses, whereas they have low filtration efficiencies which are insufficient for use as filters.

Comparative Example 13 in which the ultrafine fiber sheet and the non-ultrafine fiber sheet were not unitedly intermingled because the entangling treatment was performed at a low water pressure shows a large pressure loss of 9 Pa.

On the other hand, as shown in Tables 5 and 6, each of Examples 1 to 7 in which the ultrafine fibers are unitedly intermingled with the non-ultrafine fibers such that the ultrafine fibers relatively uniformly exist in the upper layer and the lower layer because entanglement treatment is performed with the specific non-ultrafine fiber layer in these Examples. Therefore, Examples 1 to 7 can have not only high filtration efficiencies but also small pressure losses. Examples I to 7 also are good in fluffing evaluation without fluffing. Examples 1 to 7 further have higher QF values concerning filtration performance after destaticization than those of Comparative Examples 1, 3, 7, 9, 10 and 12. In particular, Examples 6 and 7 have excellent heat resistance and have QF values concerning filtration performance after heating at 100°C than those of Comparative Examples 7, 9, 10 and 12.

INDUSTRIAL APPLICABILITY

The fiber structure according to the present invention can have not only a high filtering efficiency but also a small pressure loss, so that the fiber structure is suitable for various filters (in particular, air filters) and so on. For example, the fiber structure can be used as a filter for mask, various air conditioning systems (e.g., for buildings, cleanrooms, coating booths), a filter for the motor vehicle industry (such as cabin filter), and a general household filter (e.g., for air conditioners, air cleaners, vacuum cleaners). In particular, the fiber structure according to the present invention can be applied as a non-electrified filter to various air filter applications because of excellent filtration performance after destaticization.

Although the present invention has been described in terms of the preferred embodiments thereof with reference to the drawings, various additions, modifications, or deletions may be made without departing from the scope of the invention. Accordingly, such variants are included within the scope of the present invention.

REFERENCE NUMERALS

| | |
|---|---|
| 1, 3 | projection top |
| 2 | projection bottom |
| X | width direction |
| Y | thickness direction |
| t | thickness of a fiber structure |
| h | projection height |

**Claims**

**1.** A fiber structure comprising ultrafine fibers having a number average single fiber diameter of 4.5 μm or smaller and non-ultrafine fibers having a number average single fiber diameter of 5.5 μm or larger, wherein the ultrafine fibers and the non-ultrafine fibers are unitedly intermingled, and the fiber structure has projections on at least one surface thereof.

**2.** The fiber structure as claimed in claim 1, wherein the ultrafine fibers are heat-resistant ultrafine fibers, and the non-ultrafine fibers are heat-resistant non-ultrafine fibers.

**3.** The fiber structure as claimed in claim 1 or 2, wherein the ultrafine fibers and the non-ultrafine fibers are not fused to each other.

**4.** The fiber structure as claimed in any one of claims 1 to 3, wherein the fiber structure is an entangled product of one or more ultrafine fiber nonwoven fabrics including the ultrafine fibers and one or more non-ultrafine fiber nonwoven fabrics including the non-ultrafine fibers.

5. The fiber structure as claimed in any one of claims 1 to 4, wherein the fiber structure contains the ultrafine fibers in an upper layer part and a lower layer part which are two halves in a cross-sectional thickness direction of the fiber structure, at a ratio of from 25/75 to 75/25 as (ultrafine fibers in upper layer part) / (ultrafine fibers in lower layer part).

6. The fiber structure as claimed in any one of claims 1 to 5, wherein the projections have a height in a range of from 0.05 to 5.00 mm.

7. The fiber structure as claimed in any one of claims 1 to 6, wherein the fiber structure has a projection density of 3 or more projections/$cm^2$.

8. The fiber structure as claimed in any one of claims 1 to 7, wherein the fiber structure has a basis weight of from 15 to 120 $g/m^2$.

9. The fiber structure as claimed in any one of claims 1 to 8, wherein the fiber structure has a filtering efficiency of 5% or higher after destaticization.

10. The fiber structure as claimed in any one of claims 1 to 9, wherein the fiber structure has a QF value of 0.03 or larger which is calculated by the following formula from a filtering efficiency and a pressure loss after destaticization.

$$\text{QF value} = -\ln(1 - \text{filtering efficiency (\%)} / 100) / \text{pressure loss (Pa)}$$

11. The fiber structure as claimed in any one of claims 1 to 10, wherein the fiber structure has a QF value of 0.25 or larger which is calculated by the following formula from a filtering efficiency and a pressure loss after heating at 100°C for 48 hours.

$$\text{QF value} = -\ln(1 - \text{filtering efficiency (\%)} / 100) / \text{pressure loss (Pa)}$$

12. The fiber structure as claimed in any one of claims 1 to 11, wherein the fiber structure is not subjected to electrification.

13. An air filter comprising the fiber structure as recited in any one of claims 1 to 12.

14. A method of producing the fiber structure as recited in any one of claims 1 to 12, the method at least comprising:

preparing a layered body of (i) an ultrafine fiber layer including ultrafine fibers having a number average single fiber diameter of 4.5 μm or smaller and (ii) a non-ultrafine fiber layer including non-ultrafine fibers having a number average single fiber diameter of 5.5 μm or larger, the non-ultrafine fiber layer having projections on at least one surface thereof; and
subjecting the layered body to entangling treatment.

15. The method as claimed in claim 14, wherein the non-ultrafine fiber layer is a meltblown nonwoven fabric.

16. The method as claimed in claim 14 or 15, wherein the non-ultrafine fiber layer has an apparent density of from 0.005 to 0.07 $g/cm^3$.

17. The method as claimed in any one of claims 14 to 16, wherein the entangling treatment is carried out by spunlacing.

18. The method as claimed in any one of claims 14 to 17, wherein the ultrafine fiber layer and the non-ultrafine fiber layer have basis weight W1 and W2, respectively, at a ratio W2/W1 of from 1.2 to 8.0.

Fig. 1

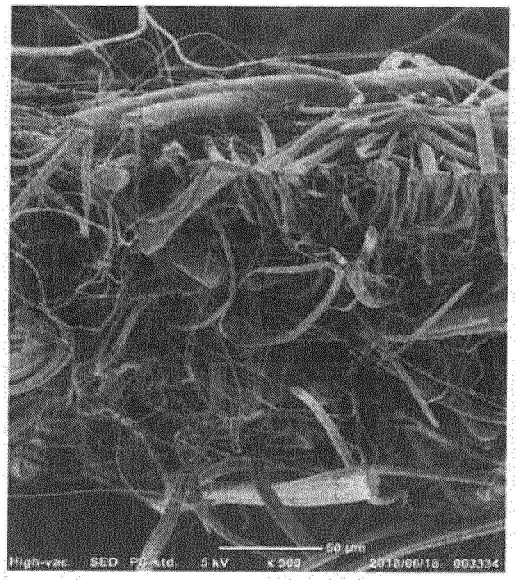

Fig. 2

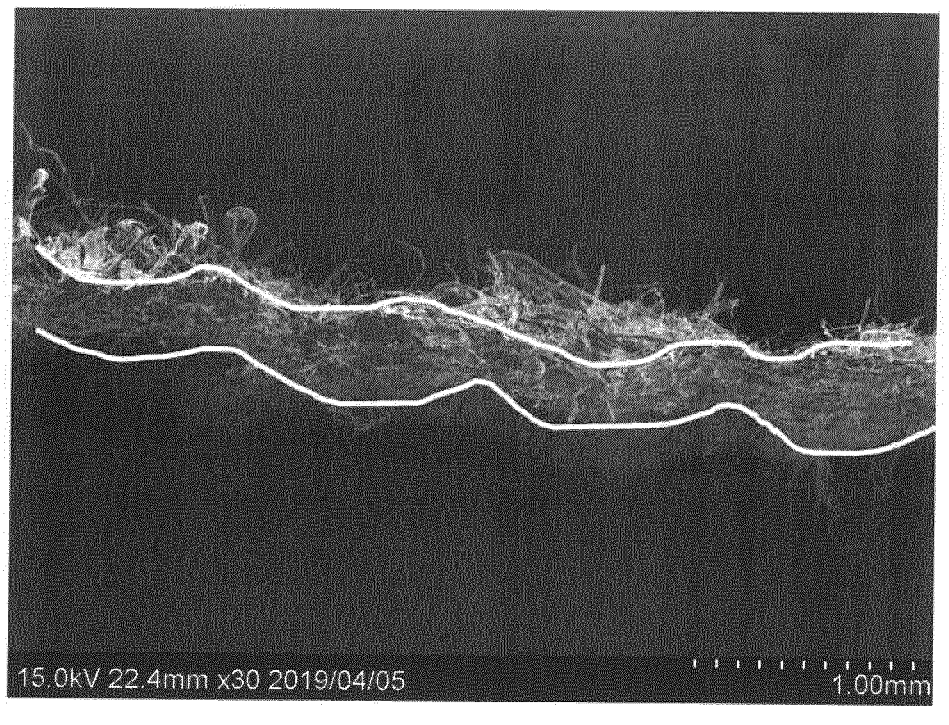

Fig. 3

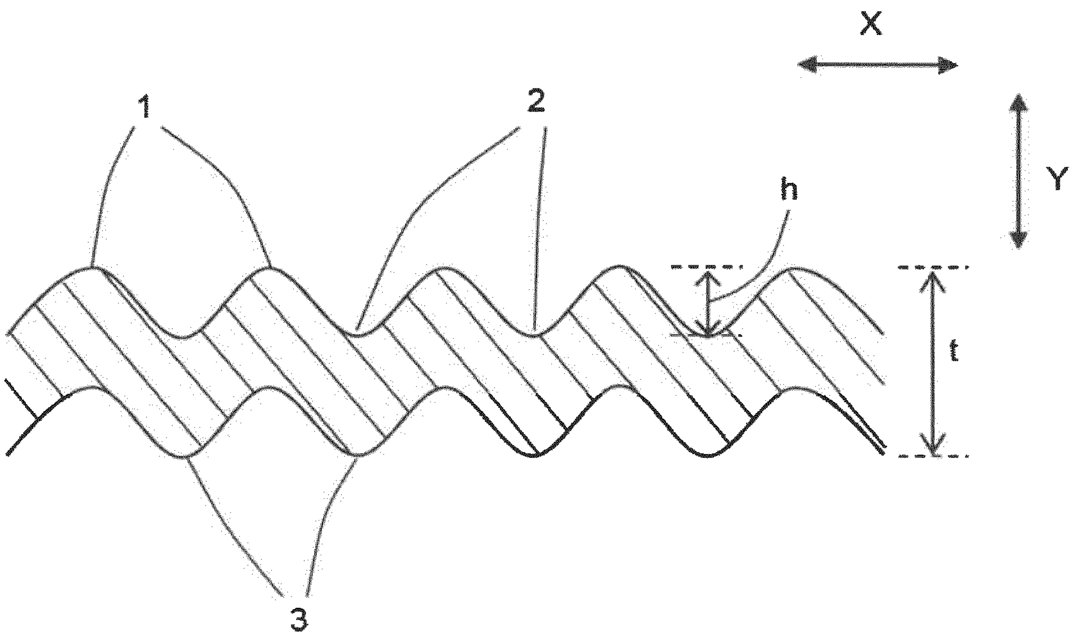

## INTERNATIONAL SEARCH REPORT

International application No. PCT/JP2020/025997

A. CLASSIFICATION OF SUBJECT MATTER
Int.Cl. D04H1/498(2012.01)i, B01D39/16(2006.01)i, D04H1/492(2012.01)i, D04H3/11(2012.01)i
FI: D04H1/498, D04H1/492, B01D39/16A, D04H3/11
According to International Patent Classification (IPC) or to both national classification and IPC

B. FIELDS SEARCHED
Minimum documentation searched (classification system followed by classification symbols)
Int.Cl. D04H1/00-18/04, B01D39/00-39/20, B32B1/00-43/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2018-178337 A (ASAHI KASEI CORPORATION) 15.11.2018 (2018-11-15), claims, examples 1, 6, paragraphs [0002], [0029], [0049] | 1-18 |
| A | JP 2001-279570 A (TOYOBO CO., LTD.) 10.10.2001 (2001-10-10), claims, example 3 | 1-18 |
| A | JP 2006-299425 A (ASAHI KASEI FIBERS CORPORATION) 02.11.2006 (2006-11-02), claims, examples 4, 9, 16 | 1-18 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25.08.2020 | 08.09.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/025997

| | | |
|---|---|---|
| JP 2018-178337 A | 15.11.2018 | (Family: none) |
| JP 2001-279570 A | 10.10.2001 | (Family: none) |
| JP 2006-299425 A | 02.11.2006 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019131482 A
- JP 2019131483 A
- WO 2017018317 A1